# EUROPÄISCHE PATENTSCHRIFT

(11) **EP 3 029 647 B1**
(45) Veröffentlichungstag und Bekanntmachung des Hinweises auf die Patenterteilung: **31.05.2017**
(21) Anmeldenummer: 14196365.2
(22) Anmeldetag: 04.12.2014
(51) Int. Cl.: G08B 17/107

(54) **Offener Streulichtrauchmelder, insbesondere mit einer Sidelooker-LED**
Open scattered light smoke detector, particularly with a sidelooker LED
Détecteur de fumée à écran diffusant ouvert, notamment équipé d'une LED Side-looker

(43) Veröffentlichungstag der Anmeldung: 08.06.2016
(73) Patentinhaber: Siemens Schweiz AG, 8047 Zürich (CH)
(72) Erfinder: Fischer, Martin, 8180 Bülach (CH); Rohrer, Thomas, 6072 Sachseln (CH); Stutz, Matthias, 8909 Zwillikon (CH)
(74) Vertreter: Maier, Daniel Oliver

(56) Entgegenhaltungen:
- EP-A1- 0 926 646
- WO-A2-2004/104959
- DE-A1-102013 003 614

## Beschreibung

Die Erfindung betrifft einen Streulichtrauchmelder, der eine Gehäuseschale und einen daran aufgenommenen Schaltungsträger aufweist. Auf dem Schaltungsträger sind zumindest ein Lichtsender und ein Lichtempfänger angeordnet. Der Schaltungsträger weist eine der Gehäuseschale gegenüberliegende Innenseite und eine der Innenseite gegenüberliegende Außenseite auf. Der Lichtsender ist zum Aussenden eines Lichtbündels mit einem Richtungsstrahl ausgebildet. Der Lichtsender und der Lichtempfänger sind in einer Streulichtanordnung mit einem außerhalb des Streulichtrauchmelders im Freien liegenden Streulichtvolumen angeordnet.

Aus der internationalen Veröffentlichung WO 2004/104959 A2 ist ein Rauchmelder geschlossener Bauart bekannt, bei dem ein Lichtsensor so positioniert ist, dass seine Lichtempfangsfläche parallel zu einem durch eine SMD-LED-Lichtquelle des Rauchmelders erzeugten Lichtstrahl verläuft. Die Lichtquelle und der Lichtsensor bilden eine Streulichtanordnung und sind beide auf einem Schaltungsträger angeordnet. Nach einer Ausführungsform sind die Lichtquelle und der Lichtsensor so auf dem Schaltungsträger angeordnet, dass die Senderichtung und Empfangsrichtung normal zum Schaltungsträger und somit parallel zueinander verlaufen. Zur Lichtstrahlumlenkung um 90° ist hierzu dem Lichtsender ein Prisma nachgeschaltet.

Aus der EP 2093734 A1 ist ein offener Streulichtrauchmelder mit einem planen Schaltungsträger bekannt. Auf diesem sind ein Lichtsender zum Aussenden eines Beleuchtungslichts sowie ein daneben angebrachter Lichtempfänger zum Empfangen von Messlicht angeordnet. Das Messlicht resultiert aus einer Rückstreuung des Beleuchtungslichts von beispielsweise Rauch in einem außerhalb des Streulichtrauchmelders im Freien liegenden Detektionsraum. Der Lichtsender sendet das Beleuchtungslicht senkrecht zu der Ebene des Schaltungsträgers aus. Das Beleuchtungslicht wird im Detektionsraum zumindest teilweise um annähernd 180°, also zwischen 170° und 190°, zurückgestreut. Das zurückgestreute Licht erreicht dann als Messlicht den Lichtempfänger, dessen Hauptempfangsrichtung gleichfalls senkrecht zur Ebene des Schaltungsträgers ist.

Nachteilig bei dieser Rückwärts-Streulichtanordnung ist, dass der weitaus größte Teil des Messlichts verloren geht. Zudem ist der Lichtempfänger gegen Umwelteinflüsse und mechanischen Einwirkungen ungeschützt.

Aus der EP 1191496 A1 und EP 1039426 A2 ist jeweils ein offener Streulichtrauchmelder mit einem Lichtsender und einem Lichtempfänger bekannt, die derart angeordnet sind, sodass der Streupunkt von dem Lichtsender und dem Lichtempfänger außerhalb des Streulichtrauchmelders im Freien liegt. Lichtsender und Lichtempfänger sind in einer Streulichtanordnung unter einem Streulichtwinkel von etwa 80° bis 90° angeordnet. Die Hauptstrahlrichtung des Lichtsenders und die Hauptempfangsrichtung des Lichtempfängers sind somit um diese etwa 80° bis 90° zueinander geneigt. Bei Anbringung eines solchen Streulichtrauchmelders an einer Montagefläche, typischerweise an der Decke, sind die Hauptstrahlrichtung des Lichtsenders sowie die Hauptempfangsrichtung des Lichtempfängers dann um etwa 40° bis 45° gegenüber dieser Montagefläche geneigt.

Durch die geneigte Streulichtanordnung im Bezug auf die Montagefläche weisen die beiden offenen Streulichtrauchmelder eine vergleichsweise große Bauhöhe auf.

Ausgehend von dem eingangs genannten Stand der Technik ist es eine Aufgabe der Erfindung, einen offenen Streulichtrauchmelder anzugeben, der einen besonders einfach Aufbau und eine besonders geringe Bauhöhe aufweist.

Es ist eine weitere Aufgabe der Erfindung, einen offenen Streulichtrauchmelder anzugeben, bei dem die optisch aktive Fläche des Lichtsenders sowie des Lichtempfängers besonders gut gegen mechanische Einwirkungen geschützt ist.

Die Aufgabe wird mit den Gegenständen des Hauptanspruchs gelöst. Vorteilhafte Ausführungsformen der vorliegenden Erfindung sind in den abhängigen Ansprüchen angegeben.

Erfindungsgemäß verläuft ein Teil der Wegstrecke des Richtungsstrahls zwischen Lichtsender und dem Streulichtvolumen parallel zur Außenseite des Schaltungsträgers. Vorzugsweise verläuft ein Großteil dieser Wegstrecke, d.h. mindestens 80 %, vorzugsweise mindestens 90 %, parallel zur Außenseite.

Mit "parallel" ist hier gemeint, dass ein Teil der Wegstrecke dieses Richtungsstrahls auch annähernd parallel zur Außenseite des Schaltungsträgers verlaufen kann, wie z.B. aufgrund von Montagetoleranzen. Dieser Richtungsstrahl kann daher auch unter einem spitzen Winkel von weniger als 5° zur Außenseite des Schaltungsträgers verlaufen.

Bei dem Lichtbündel handelt es sich um ein paralleles, vorzugsweise jedoch um ein divergierendes Lichtbündel. Ein solches Lichtbündel ist durch Randstrahlen begrenzt. Dagegen ist durch den in der Mitte des Lichtbündels verlaufenden Richtungsstrahl die Richtung des Lichtbündels angegeben.

Bei dem Lichtsender handelt es sich üblicherweise um eine Leuchtdiode, die vorzugsweise monochromatisches Licht in einem Wellenlängenbereich von 350 nm bis 1000 nm, also in einem Wellenlängenbereich von Ultraviolett bis Infrarot, aussendet.

Der Photosensor ist vorzugsweise eine Halbleiter-Photodiode. Er ist optisch sensitiv für das vom Lichtsender ausgesandte Licht.

Durch den zumindest teilweisen Verlauf des Lichtbündels parallel zum Schaltungsträger lässt sich vorteilhaft die Bauhöhe eines offenen Streulichtrauchmelders deutlich reduzieren.

Im Vergleich zur Rückwärts-Streulichtanordnung gemäß der eingangs genannten EP 2093734 A1 ist ein deutlich größerer Anteil von Messlicht bzw. Streulicht durch den Photosensor detektierbar, da die Beleuchtung der zu detektierenden Partikel mehr in Richtung hin zum Photosensor erfolgt.

Ein weiterer Vorteil liegt darin, dass die optisch aktive Fläche des Lichtsenders, die typischerweise senkrecht zum Schaltungsträger und somit auch senkrecht zur Montagefläche angeordnet ist, nun vorteilhaft gegen mechanische Einwirkungen auf den offenen Streulichtrauchmelder typischerweise in Richtungen hin zur Montagefläche geschützt ist.

Nach einer Ausführungsform ist der Lichtsender derart auf dem Schaltungsträger angeordnet und ausgerichtet, dass das von ihm ausgesandte Lichtbündel vom Rand des Schaltungsträgers in Richtung zu einem gegenüberliegenden Rand des Schaltungsträgers verläuft, d.h. zumindest in etwa zur (geometrischen) Mitte des Schaltungsträgers hin.

Dadurch ist vorteilhaft ein möglichst großer Abstand zwischen dem Lichtsender und dem in der Mitte des Schaltungsträgers angeordneten Photosensors realisierbar, sodass die Beleuchtung des Streulichtvolumens vom Lichtsender aus betrachtet erst in seinem Fernfeld erfolgt. Mit "Fernfeld" ist hier der Bereich von der optisch aktiven Fläche des Lichtsenders bzw. der LED bezeichnet, der mehr als 5 cm davon entfernt ist. In diesem Fernfeld liegt eine weitgehend homogene und reproduzierbare Lichtverteilung vor, sodass auch das Streulicht in messtechnischer Hinsicht eine zuverlässige Lichtverteilung aufweist.

Dagegen weist die Lichtverteilung im Nahfeld der Lichtquelle nicht sicher reproduzierbare lokale Auslöschungen, Abschwächungen und Erhöhungen aufgrund von Interferenzen auf. Folglich ist auch das Streulicht gleichfalls mit diesen Unsicherheiten belegt. Hersteller von LEDs spezifizieren daher die Lichtverteilung erst im Fernfeld.

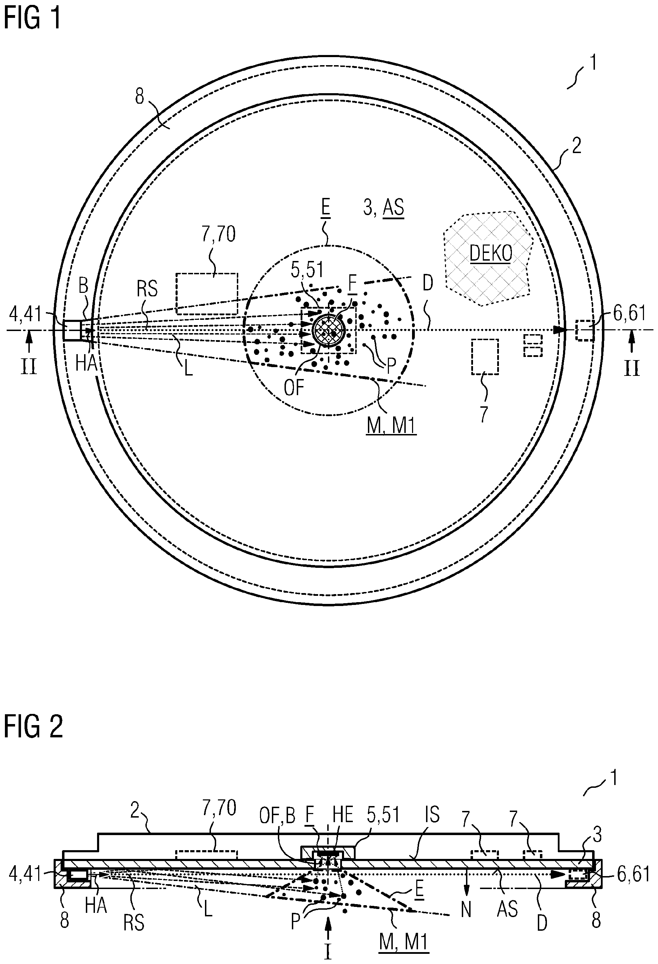

Ein weiterer Vorteil liegt darin, dass der am (radialen) Außenrand angeordnete Lichtsender in konstruktiv einfacher Weise zusätzlich noch durch eine ringförmige Einfassung oder durch einen ringförmigen Rahmen für die Aufnahme des Schaltungsträgers am Streulichtrauchmelder gegen mechanische Einwirkungen abgedeckt werden kann (siehe FIG 1). Eine derartige Einfassung des Schaltungsträgers ist typischerweise bereits aus mechanischen und gestalterischen Gründen vorgesehen.

Nach einer besonders vorteilhaften Ausführungsform ist der Lichtsender eine sogenannte "Sidelooker"-LED. Eine derartige LED wird auch als "Side-Emitting"-LED oder auch als "Side-View"-LED bezeichnet. Bei dieser LED handelt es sich um ein SMD-Bauteil, welches für die direkte Oberflächenmontage auf einem Schaltungsträger ausgebildet ist.

Der besondere Vorteil liegt hier darin, dass mittels einer solchen "Sidelooker"-LED Licht direkt und ohne weitere optische Hilfsmittel parallel zum Schaltungsträger ausgesandt werden kann. Derartige LEDs werden in hohen Stückzahlen gefertigt, jedoch zu ganz anderen Zwecken, insbesondere zur Beleuchtung von Displays und Touchscreens von der Seite her eingesetzt. Ein weiterer Vorteil ist, dass solche LEDs deswegen bereits zum Aussenden eines schmalen Lichtbündels von weniger als 30° ausgebildet sind.

Nach einer Ausführungsform ist der Lichtempfänger gegenüber direktem Licht vom Lichtsender abgeschirmt. Seine Hauptempfangsrichtung zeigt weg von der Außenseite des Schaltungsträgers. Insbesondere ist die Hauptempfangsrichtung senkrecht zur Außenseite des Schaltungsträgers.

Die Abschirmung gegen direktes Licht vom Lichtsender kann z.B. mittels einer Blende erfolgen, die zwischen Lichtsender und Lichtempfänger auf der Außenseite des Schaltungsträgers angeordnet ist.

Nach einer bevorzugten Ausführungsform weist der Lichtempfänger eine Sensorfläche auf. Es ist ein optisches Fenster im Schaltungsträger für den Lichtempfänger vorgesehen. Der Lichtempfänger ist derart auf der Innenseite des Schaltungsträgers angeordnet und ausgerichtet, dass die Sensorfläche parallel zur Innenseite des Schaltungsträgers verläuft und dem optischen Fenster gegenüberliegt, sodass Streulicht vom Lichtsender durch das als Blende fungierende optische Fenster hindurch detektierbar ist.

Im einfachsten Fall ist das optische Fenster eine Öffnung oder Bohrung im Schaltungsträger. Die Öffnung kann gegebenenfalls durch eine transparente Schutzabdeckung aus Kunststoff oder Glas verschlossen sein. Die Öffnung kann alternativ mit einer optischen Linse aus Kunststoff oder Glas versehen sein, sodass ein optisch größerer Erfassungsbereich für das zu erfassende Streulicht zur Verfügung steht.

Der besondere Vorteil liegt zum einen in der Blendenwirkung der Öffnung einerseits und in der mechanisch geschützten Anordnung des Photosensors "hinter" dem Schaltungsträger.

Vorzugsweise ist dann der Lichtempfänger eine Photodiode mit einem Flip-Chip-Gehäuse oder mit einem sogenannten Reverse-Gullwing-Gehäuse. Derartige SMD-Bauformen der Photodiode (SMD für Surface-Mounted Device) sind besonders vorteilhaft für eine direkte Oberflächenmontage auf dem Schaltungsträger, also für eine SMT (SMT für Surface-Mounting Technology), geeignet. SMD-Bauelemente haben dabei im Gegensatz zu Bauelementen der Durchsteckmontage keine Drahtanschlüsse. Sie werden können daher mittels lötfähiger Anschlussflächen direkt auf dem Schaltungsträger gelötet werden.

Nach einer alternativen Ausführungsform weist der Lichtempfänger eine Sensorfläche auf. Der Lichtempfänger ist derart auf der Außenseite des Schaltungsträgers angeordnet und ausgerichtet, dass zum einen die Sensorfläche parallel zur Außenseite des Schaltungsträgers verläuft und zum anderen Streulicht vom Lichtsender detektierbar ist. In diesem Fall ist gegebenenfalls eine Blende zum Schutz gegen direktes Licht vom Lichtsender und gegebenenfalls auch eine transparente Schutzabdeckung erforderlich.

Einer Ausführungsform zufolge ist der Schaltungsträger zur Anbringung einer Dekorplatte oder einer Dekorfolie auf der Außenseite des Schaltungsträgers vorgesehen oder hierzu ausgebildet. Die Dekorplatte oder Dekorfolie kann gegebenenfalls Aussparungen oder ein transparentes Fenster für den Lichtempfänger und/oder für weitere optoelektronische Bauelemente aufweist. Mit "transparentem Fenster" ist hier gemeint, dass die Dekorplatte bzw. die Dekorfolie an der entsprechenden Stelle klar oder diffus durchsichtig ist.

Der besondere Vorteil liegt darin, dass der offene Streulichtrauchmelder dekorativ an die äußere Umgebung des Raums angepasst werden kann. Der Streulichtrauchmelder kann dabei so ausgebildet sein, dass die Dekorplatte z.B. auf den Schaltungsträger aufschnappbar ist. Dekorfolie kann z.B. eine einseitige Klebefolie sein, die dann auf dem Schaltungsträger aufgeklebt werden kann.

Nach einer bevorzugten Ausführungsform ist auf dem Schaltungsträger ein Direktlichtempfänger angeordnet. Der Direktlichtempfänger auf den Lichtsender zur Detektion von direktem Licht ausgerichtet ist, wobei sich das Streulichtvolumen zwischen diesem Lichtsender und dem Direktlichtempfänger befindet und wobei der Direktlichtempfänger zur Verschmutzungsüberwachung und/oder zur Überwachung einer Helligkeitsabnahme des Lichtsenders vorgesehen ist.

Mit anderen Worten ist der Direktlichtempfänger gegenüberliegend zum Lichtsender angeordnet. Insbesondere fluchten die optische Sendeachse des Lichtsenders und die optische Empfangsachse des Direktlichtempfängers miteinander.

Durch diese Anordnung ist einerseits eine Verschmutzung im optischen Pfad zwischen Lichtsender und Direktlichtempfänger detektierbar. Unterschreitet ein vom Direktlichtempfänger ausgegebenes Empfängersignal einen vorgegebenen Mindestpegel, so ist eine entsprechende Warnmeldung für einen Benutzer ausgebbar. Anderseits ist vorteilhaft eine Funktionskontrolle des Lichtsenders möglich. Hierzu kann das vom Direktlichtempfänger ausgegebene Empfängersignal zur Kompensation von Alterungseffekten des Lichtsenders, insbesondere eine LED, verwendet werden. So kann beispielsweise eine detektierte Abnahme des Empfängersignals, welche einer Helligkeitsabnahme entspricht, mittels der elektronischen Steuer- und Auswerteeinheit zumindest teilweise kompensiert werden.

Dadurch kann vorteilhaft eine Nennempfindlichkeit für die Rauchdetektion auch bei steigender Verschmutzung beibehalten werden.

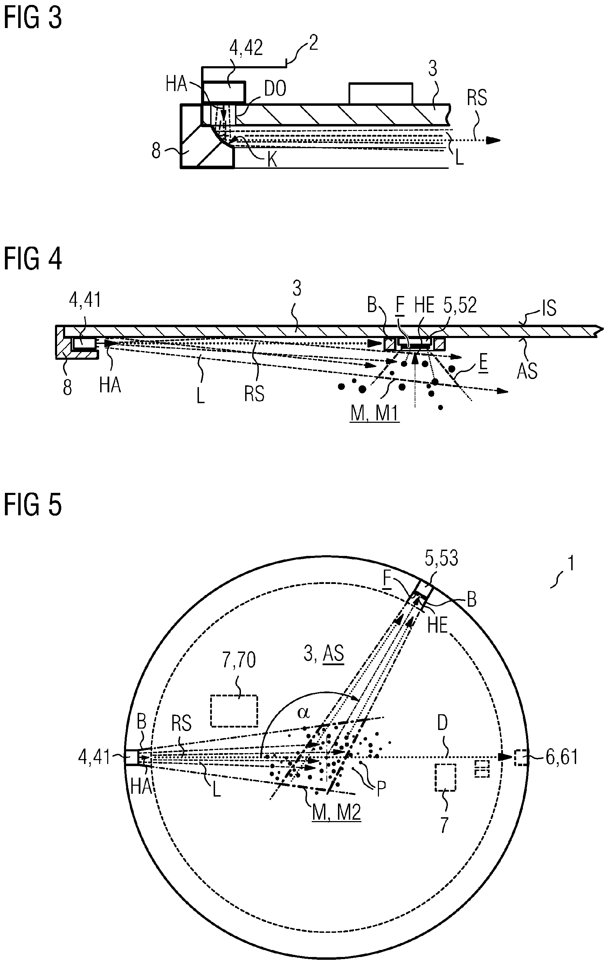

Alternativ zu der Anordnung des Lichtempfängers in etwa der Mitte des Schaltungsträger und unabhängig davon, ob dieser auf der Innen- oder Außenseite des Schaltungsträgers angeordnet ist, kann der Lichtempfänger auch in einem Randbereich des Schaltungsträgers und unter einem Streulichtwinkel zum Lichtsender angeordnet und ausgerichtet sein (siehe FIG 5). In diesem Fall befindet sich das so gebildete Streulichtvolumen gegenüberliegend zur Außenseite des Schaltungsträgers und vorzugsweise in etwa der Mitte des Schaltungsträgers. Die Hauptempfangsrichtung des Lichtempfängers ist in diesem Fall nicht senkrecht, sondern parallel zu dieser Außenseite.

Vorzugsweise sind sowohl der Lichtsender als auch der Lichtempfänger als SMD-Bauteil realisiert und insbesondere als "Sidelooker"-LED bzw. als "Sidelooker"-Photodiode ausgebildet.

Der Lichtsender kann auch eine Zweifarben-"Sidelooker"-LED sein. Sie kann zum Aussenden von zwei Lichtbündeln monochromatischen Lichts mit unterschiedlicher Wellenlänge eingerichtet sein. Die beiden Lichtbündel weisen im Wesentlichen einen gleichen gemeinsamen Richtungsstrahl auf und sie unterscheiden sich im Wesentlichen nur in ihrer Farbe. Das jeweilige ausgesandte Licht kann z.B. ultraviolettes, blaues, grünes, rotes oder infrarotes Licht sein. In diesem Fall einer gemeinsamen Streulichtanordnung unter einem selben Streulichtwinkel ist durch die Steuer- und Auswerteeinheit mittels geeigneter Auswertesoftware die Bestimmung der Partikelgröße von Rauchpartikeln im Streulichtvolumen möglich. Vorzugsweise ist das ausgesandte Licht blaues und infrarotes Licht. Natürlich kann die zuvor genannte "Sidelooker"-LED auch eine Mehrfarben-LED sein wie z.B. eine RGB-"Sidelooker"-LED.

Nach einer besonders vorteilhaften Ausführungsform ist auf dem Schaltungsträger ein Direktlichtempfänger angeordnet. Dieser ist zur Detektion von direktem Licht vom Lichtsender auf den Lichtsender ausgerichtet. Der Streulichtrauchmelder weist eine elektronische Steuer- und Auswerteeinheit auf, die signaltechnisch mit dem Lichtsender und dem Direktlichtempfänger verbunden ist. Sie ist dazu eingerichtet, den Lichtsender anzusteuern sowie das vom Direktlichtempfänger stammende Signal zu erfassen und auf eine Folge von Signalsprüngen mit großen Signaländerungen hin auszuwerten. Die Steuer- und Auswerteeinheit ist zudem dazu eingerichtet, derartige Signalfolgen mit zumindest einer vorgegebenen benutzerseitigen Befehlsfolge zu vergleichen und im Fall einer gültigen Befehlsfolge den Streulichtrauchmelder in eine der Befehlsfolge zugeordneten Betriebsart umzuschalten.

Typischerweise weist ein Streulichtrauchmelder bereits eine Steuer- und Auswerteeinheit zum Ansteuern des Lichtsenders sowie zur Auswertung des vom Lichtempfänger detektierten Streulichts an Rauchpartikeln auf, um dann bei Überschreiten eines Mindestkonzentrationswerts der Rauchpartikel einen Alarm auszugeben. Die Steuer- und Auswerteeinheit ist vorzugsweise prozessorgestützt und insbesondere ein Mikrocontroller, auf dem ein geeignetes Computerprogramm ausgeführt wird.

Mit der benutzerseitigen Eingabe einer Befehlsfolge sind hier abrupte Unterbrechungen der Lichtstrecke zwischen Lichtsender und Direktlichtempfänger gemeint, die entstehen, wenn ein Benutzer, wie z.B. ein Servicefachmann oder ein Wohnungsbesitzer, mit seinem Finger die obengenannte Lichtstrecke im Sinne eines Tastendrückens unterbricht. Dadurch dass der Finger die Lichtstrecke nahezu vollständig unterbricht bzw. diese wieder freigibt, weist das empfangene Signal des Direktlichtempfängers einen digitalen Verlauf mit Signalsprüngen in einem zeitlichen Bereich von wenigen 100 ms. In diesem Sinne können vorteilhaft solche "Touch-Events" detektiert und unterschiedlich interpretiert werden.

Eine Befehlsfolge kann z.B. ein Morsekode sein, wie z.B. "Lang - Lang - Kurz" oder "Kurz - Kurz - Kurz". Ein derartiger Kode ist eindeutig und kann somit als eindeutige Befehlsfolge durch die Steuer- und Auswerteeinheit detektiert werden. Es sind alternativ beliebige Folgen mit binären Kodes vorstellbar, wie z.B. Puls-Positions-Kodes oder Puls-Pausen-Kodes. Die Detektion einer gültig erfassten Befehlsfolge kann mittels der Steuer- und Auswerteeinheit durch kurzzeitiges Ansteuern einer Indikator-LED und/oder eines Buzzers des Streulichtrauchmelders erfolgen.

Die umschaltbaren Betriebsarten eines Streulichtrauchmelders können z.B. verschiedene Funktionsmodi aufweisen, wie z.B. ein Alarmauslöseprofil (sensibel, mittel, robust), ein Lautstärkeprofil (laut, mittel, leise), Umgebungsüberwachung (ein, aus), Verschmutzungsüberwachung (ein, aus), Flammenüberwachung (ein, aus) und dergleichen.

Ein Benutzer kann somit vorteilhaft während des Betriebs des Streulichtrauchmelders Anpassungen an das Verhalten des Streulichtrauchmelders vornehmen.

Nach einer alternativen Ausführungsform weist der Streulichtrauchmelder eine an der Außenseite des Schaltungsträgers angeordnete, zur Abdeckung des Schaltungsträgers vorgesehene flächige (lichtdichte) Schutzabdeckung auf. Die Schutzabdekkung ist zur Außenseite des Schaltungsträgers beabstandet angeordnet, sodass zwischen der Außenseite des Schaltungsträgers und einer gegenüberliegenden Innenseite der Schutzabdekkung ein Lichtkanal für das vom Lichtsender ausgesandte Lichtbündel resultiert. Die Schutzabdeckung weist eine Aussparung für ein Lichtausleit-/Trichterelement auf. Das Lichtausleit-/Trichterelement weist einen Lichttrichter für den Lichtempfänger sowie ein sich daran anschließendes Lichtausleitteil zum Ausleiten des vom Lichtsender im Lichtkanal verlaufenden Lichtbündels auf. Das Lichtausleitteil ist derart ausgestaltet, dass das ausgeleitete Lichtbündel über den Lichttrichter hinweg in die Umgebung des Streulichtrauchmelders verläuft.

Der Lichtkanal bietet vorteilhaft einen sehr guten Schutz des Lichtsenders gegenüber mechanischen Einwirkungen sowie gegen Verschmutzung. Der Lichttrichter dient vorteilhaft zur Vergrößerung des optischen Empfangsbereichs. Der Lichtsender ist vorzugsweise eine "Sidelooker"-LED bzw. "Side-Emitting"-LED.

Nach einer weiteren alternativen Ausführungsform weist der Streulichtrauchmelder eine an der Außenseite des Schaltungsträgers angeordnete, zur Abdeckung des Schaltungsträgers vorgesehene flächige (lichtdichte) Schutzabdeckung auf. Die Schutzabdeckung ist zur Außenseite des Schaltungsträgers beabstandet angeordnet, sodass zwischen der Außenseite des Schaltungsträgers und einer gegenüberliegenden Innenseite der Schutzabdeckung ein Aufnahmeraum für ein an den Lichtsender angrenzendes Lichtleiterelement zum Weiterleiten des vom Lichtsender ausgesandten Lichtbündels resultiert. Das Lichtleiterelement ist vorzugsweise aus transparentem Kunststoff oder Glas hergestellt und vorzugsweise ein einstückiges Bauteil. Die Schutzabdeckung weist eine Aussparung für ein Lichtausleitteil des Lichtleiterelements auf. Das Lichtleiterelement ist derart ausgestaltet, dass das im Lichtleiterelement verlaufende Lichtbündel an einer Austrittsfläche des Lichtausleitteils auskoppelt und über einen Empfangsbereich des Lichtempfängers hinweg in die Umgebung des Streulichtrauchmelders verläuft.

Das Lichtausleitteil erlaubt vorteilhaft eine nahezu verlustfreie und gerichtete Auskopplung des vom Lichtsender ausgesandten Lichts. Der Lichtsender ist vorzugsweise wieder eine "Sidelooker"-LED bzw. eine "Side-Emitting"-LED.

Nach einer besonders vorteilhaften Ausführungsform ist auf der Außenseite des Schaltungsträgers zumindest ein erster Umgebungslichtsender zum Aussenden von Licht weg von der Außenseite und im Wesentlichen senkrecht zu dieser in die Umgebung des Streulichtrauchmelders angeordnet ist.

Alternativ oder zusätzlich dazu können auf der Außenseite des Schaltungsträgers in einem radial außenliegenden Randbereich mehrere zweite Umgebungslichtsender zum Aussenden von Licht im Wesentlichen radial weg vom Streulichtrauchmelder in die Umgebung des Streulichtrauchmelders angeordnet sein.

Der Lichtempfänger ist auf dem Schaltungsträger derart angeordnet, dass dessen Hauptempfangsrichtung weg von der Außenseite des Schaltungsträgers zeigt und senkrecht zu dieser.

Vorzugsweise ist der Lichtempfänger der bereits für die Rauchdetektion vorgesehene bzw. vorhandene Lichtempfänger bzw. die Photodiode. Dadurch wird vorteilhaft kein separater Lichtempfänger benötigt.

Gegebenenfalls sind auf der Außenseite des Schaltungsträgers in dem radial außenliegenden Randbereich noch mehrere Umgebungslichtempfänger zur Detektion von Umgebungslicht aus im Wesentlichen radialer Richtung hin zum Streulichtrauchmelder angeordnet.

Der Streulichtrauchmelder weist eine elektronische Steuer- und Auswerteeinheit auf, welche signaltechnisch mit den Umgebungslichtsendern und dem Lichtempfänger sowie gegebenenfalls mit den Umgebunglichtempfängern verbunden ist. Die Steuer- und Auswerteeinheit ist dazu eingerichtet, die jeweiligen Umgebungslichtsender zur Aussendung von insbesondere modulierten Lichtimpulsen anzusteuern. Sie ist zudem dazu eingerichtet, die vom Lichtempfänger und gegebenenfalls von den Umgebungslichtempfängern stammenden Signale, die mit den an Gegenständen reflektierten modulierten Lichtimpulsen korrelieren, zu erfassen, zeitlich auszuwerten und eine Warnmeldung auszugeben, wenn ein detektierter Gegenstand innerhalb einer vorgegebenen Distanz um den Streulichtrauchmelder liegt und einen vorgegebenen Mindestsignalpegel überschreitet.

Dadurch wird ein Benutzer des erfindungsgemäßen Streulichtrauchmelders informiert, falls sich strömungsabschirmende Objekte in der Umgebung des Streulichtrauchmelders befinden. In einem Brandfall könnte der entstehende Rauch gegebenenfalls nicht mehr zu dem Streulichtrauchmelder gelangen.

Unabhängig von der vorliegenden Erfindung betrifft die vorherige Ausführungsform somit einen offenen Streulichtrauchmelder. Dieser weist einen Schaltungsträger mit zumindest einem Lichtsender und einem Lichtempfänger auf, die in einer Streulichtanordnung mit einem außerhalb des Streulichtrauchmelders im Freien liegenden Streulichtvolumen zur Rauchdetektion angeordnet sind. Der Streulichtrauchmelder ist zur Montage an einer Montagefläche vorgesehen, insbesondere an einer Decke. Der Lichtempfänger ist derart auf dem Schaltungsträger angeordnet und ausgerichtet, dass seine Hauptempfangsrichtung weg vom Streulichtrauchmelder zeigt und im montierten Zustand im Wesentlichen parallel zur Flächennormale der Montagefläche verläuft (siehe FIG 2).

Vorzugsweise weist der Streulichtrauchmelder eine signaltechnisch mit dem Lichtsender und dem Lichtempfänger verbundene elektronische Steuer- und Auswerteeinheit auf. Letztere ist zum Ansteuern des Lichtsenders sowie zur Auswertung des vom Lichtempfänger detektierten Streulichts an Rauchpartikeln vorgesehen, um bei Überschreiten eines Mindestkonzentrationswerts der Rauchpartikel einen Alarm auszugeben.

Der Streulichtrauchmelder weist weiterhin einen oder mehrere signaltechnisch mit der elektronischen Steuer- und Auswerteeinheit verbundene Umgebungslichtsender auf. Sie ist dazu eingerichtet, den zumindest einen Umgebungslichtsender zur Aussendung von insbesondere modulierten Lichtimpulsen anzusteuern und zudem dazu eingerichtet, ein vom Lichtempfänger stammendes Empfangssignal, das mit den an Gegenständen reflektierten modulierten Lichtimpulsen korreliert, zu erfassen, zeitlich auszuwerten und eine Warnmeldung auszugeben, wenn ein detektierter Gegenstand innerhalb einer vorgegebenen Distanz um den Streulichtrauchmelder liegt und einen vorgegebenen Mindestsignalpegel überschreitet.

Der Lichtempfänger wird sowohl für die Rauchdetektion als auch für die Umgebungsüberwachung verwendet. Ein separater Umgebungslichtempfänger ist vorteilhaft nicht erforderlich.

Schließlich kann nach einer weiteren Ausführungsform auf dem Schaltungsträger ein Wärmesensor, insbesondere ein Thermopile- oder Mikrobolometer-Wärmesensor, angeordnet sein. Der Streulichtrauchmelder weist eine elektronische Steuer- und Auswerteeinheit auf, welche signaltechnisch mit dem Wärmesensor verbunden ist und welche dazu eingerichtet ist, ein vom Wärmesensor erfasstes Signal auf das Vorhandensein von für offenes Feuer charakteristischen Flackerfrequenzen hin auszuwerten und bei Vorliegen eine Flammenmeldung auszugeben.

Dadurch kann im Falle offenen Feuers oder lodernder Glut sofort ein Brandalarm ausgegeben werden.

Die Erfindung sowie vorteilhafte Ausführungen der vorliegenden Erfindung werden am Beispiel der nachfolgenden Figuren erläutert. Dabei zeigen:
- FIG 1: ein Beispiel für einen offenen Streulichtrauchmelder mit einer Streulichtanordnung aus Lichtsender und Lichtempfänger gemäß der Erfindung,
- FIG 2: das Beispiel gemäß FIG 1 in einer Schnittdarstellung entlang der eingetragenen Schnittlinie II-II,
- FIG 3: eine Ausführungsform mit einer ringförmigen Einfassung für den Schaltungsträgers mit optischen Umlenkmitteln gemäß der Erfindung,
- FIG 4: eine Ausführungsform des Streulichtrauchmelders mit einem an der SchaltungsträgerAußenseite angeordneten Lichtempfänger mit Blende gemäß der Erfindung,
- FIG 5: eine weitere Ausführungsform mit einer am radialen Außenrand des Schaltungsträgers angeordneten Streulichtanordnung gemäß der Erfindung,
- FIG 6: eine Ausführungsform mit Schutzabdeckung und mit einer Aussparung für ein Lichtausleit-/Trichterelement gemäß der Erfindung,
- FIG 7: das Beispiel gemäß FIG 6 in einer Schnittdarstellung entlang der dortigen Schnittlinie VII-VII,
- FIG 8: eine weitere Ausführungsform des Streulichtrauchmelders mit einer erfindungsgemäßen benutzerseitigen Eingabemöglichkeit zur Betriebsartänderung,
- FIG 9: eine Ausführungsform des Streulichtrauchmelders gemäß FIG 1 mit zwei erfindungsgemäßen Streulichtanordnungen,
- FIG 10: eine weitere Ausführungsform des Streulichtrauchmelders in einer Schnittdarstellung mit einer Schutzabdeckung und mit einem Lichtleiterelement für eine Lichtauskopplung gemäß der Erfindung,
- FIG 11: eine Aufsicht auf den Streulichtrauchmelder gemäß FIG 10 in eingetragener Blickrichtung XI,
- FIG 12: eine weitere Ausführungsform des erfindungsgemäßen Streulichtrauchmelders mit einer Umgebungsüberwachung auf strömungsabschirmende Objekte hin und
- FIG 13: ein Blockschaltbild des erfindungsgemäßen Streulichtrauchmelders mit einer prozessorgestützten Steuer- und Auswerteeinheit und mit einer Vielzahl angeschlossener Lichtsender und Lichtempfänger.

FIG 1 zeigt ein Beispiel für einen offenen Streulichtrauchmelder 1 mit einer Streulichtanordnung aus Lichtsender 4, 41 und Lichtempfänger 5, 51 gemäß der Erfindung. Der Lichtsender 4 sowie auch der Lichtempfänger 5 sind in einer Streulichtanordnung mit einem außerhalb des offenen Rauchmelders 1 im Freien liegenden Streulichtvolumen M, M1 angeordnet.

Im vorliegenden Beispiel ist der Streulichtrauchmelder 1 kreisförmig ausgeführt. Er weist einen gleichfalls kreisförmig ausgeführten Schaltungsträger 3 auf, welcher in einem Aufnahmering 8 als Teil einer Gehäuseschale 2 des Rauchmelders 1 aufgenommen ist. Er dient neben der Halterungsfunktion zugleich zum Schutz des Lichtsenders 4, 41 gegenüber mechanischen Einwirkungen sowie zum Schutz gegenüber Verschmutzungen. Mit AS ist eine dem Betrachter zugewandte Außenseite des Schaltungsträgers 3 bezeichnet. Zu Dekorationszwecken kann der Schaltungsträger 3, wie zeichnerisch angedeutet, mit einer Dekorfolie DEKO versehen sein. Vorzugsweise sind die elektronischen Bauelemente 7, wie z.B. Kondensatoren, Widerstände etc., oder Mikrocontroller 70 auf einer der sichtbaren Außenseite AS gegenüberliegenden Innenseite IS des Schaltungsträgers 3 appliziert.

Der gezeigte Lichtsender 4, 41 ist zum Aussenden eines Lichtbündels L mit einem Richtungsstrahl RS ausgebildet, wobei erfindungsgemäß ein Teil der Wegstrecke des Richtungsstrahls RS zwischen Lichtsender 4, 41 und einem Streulichtvolumen M, M1 parallel zur Außenseite AS des Schaltungsträgers 3 verläuft. Das Streulichtvolumen M, M1 ist dabei die geometrische Schnittmenge zwischen einem optischen Empfangsbereich E des Lichtempfängers 5, 51 und dem Lichtbündel L. Mit HA ist weiter die Hauptabstrahlrichtung des Lichtsenders 41 und mit B eine Blende zur seitlichen Begrenzung des abgestrahlten Lichtbündels L bezeichnet. Die Blende B kann auch Teil des Aufnahmerings 8 sein.

Der Lichtsender 4, 41 ist bereits gemäß der Erfindung derart auf dem Schaltungsträger 3 angeordnet und ausgerichtet ist, dass das von ihm ausgesandte Lichtbündel L vom Rand des Schaltungsträgers 3 her in Richtung zu einem gegenüberliegenden Rand des Schaltungsträgers 3 verläuft. Der Lichtsender 4, 41 ist somit auf der Außenseite AS und in einem radial außenliegenden Randbereich des Schaltungsträgers 3 angeordnet. Der Lichtsender 4, 41 ist typischerweise eine LED. Diese ist zum Aussenden von typischerweise monochromatischen Licht in einem Wellenlängenbereich von 400 nm bis 1000 nm eingerichtet und erfindungsgemäß eine "Sidelooker"-LED bzw. "Side-Emitting"-Diode. Weiterhin ist in dieser Darstellung der als "Reverse-Gullwing"-Fotodiode ausgebildete Lichtempfänger 5, 51 zu sehen, dessen ebene Sensorfläche F gemäß der Erfindung durch eine Öffnung OF im Schaltungsträger 3 hindurch sichtbar ist. Der Photosensor 5, 51 "blickt" sozusagen durch den Schaltungsträger 3 hindurch in den Streubereich M, M1. Er kann auch zumindest teilweise in die Öffnung OF hineinragen.

FIG 2 zeigt das Beispiel gemäß FIG 1 in einer Schnittdarstellung entlang der eingetragenen Schnittlinie II-II. In dieser Darstellung ist die Streulichtanordnung mit der Ausbildung des Streulichtvolumens M, M1 besonders gut erkennbar. Es ist auch erkennbar, wie das an Rauchpartikeln P gestreute Licht durch die als Blende B fungierende Öffnung OF im Schaltungsträger 3 hindurch zur Sensorfläche F der "Reverse-Gullwing"-Photodiode 5, 51 gelangt. Die Sensorfläche F ist der Öffnung OF gegenüberliegend. Mit HE ist eine weg von der Außenseite AS des Schaltungsträgers 3 zeigende Hauptempfangsrichtung der Photodiode 5, 51 bezeichnet. Sie verläuft antiparallel zu einer mit N bezeichneten Normalen des typischerweise planen Schaltungsträgers 3.

Weiterhin ist auf dem Schaltungsträger 3 erfindungsgemäß ein Direktlichtempfänger 6 angeordnet. Dieser ist zur Detektion von direktem Licht D, symbolisiert durch einen punktierten Lichtstrahl, auf den Lichtsender 4, 41 ausgerichtet. Durch die gegenüberliegende Anordnung zum Lichtsender 4, 41 befindet sich damit auch das Streulichtvolumen M, M1 zwischen Lichtsender 4, 41 und dem Direktlichtempfänger 6, 61. Dadurch ist mittels des Direktlichtempfängers 6, 61 eine Verschmutzungsüberwachung und Funktionsüberwachung des Lichtsenders 4, 41 möglich.

FIG 3 zeigt eine Ausführungsform mit einer ringförmigen Einfassung 8 für einen Schaltungsträgers 3 des Streulichtrauchmelders 1 mit optischen Umlenkmitteln K gemäß der Erfindung.

In diesem Fall weist der Schaltungsträger 3 in seinem radialen Außenrandbereich eine Durchgangsöffnung DO für den Lichtsender 42 auf. Der Lichtsender 42 ist nun auf der Innenseite IS des Schaltungsträgers 3 derart angeordnet und ausgerichtet ist, dass das vom Lichtsender 42 ausgesandte Lichtbündel L zu einem optischen Umlenkmittel K gelangt. Im vorliegenden Beispiel weist der zur Aufnahme des Schaltungsträgers 3 ausgebildete Aufnahmering 8 eine zumindest teilweise umlaufende reflektierende Innenkontur K als optisches Umlenkmittel K auf. Das optische Umlenkmittel K liegt dabei der Durchgangsöffnung DO gegen und lenkt das dort auftreffende Lichtbündel L derart um, dass der Richtungsstrahl RS des Lichtbündels L parallel zur Außenseite AS des Schaltungsträgers 3 verläuft. Der Lichtsender 42 ist im vorliegenden Beispiel eine LED in einem Flip-Chip-Gehäuse für eine SMD-Montage.

FIG 4 zeigt eine Ausführungsform des Streulichtrauchmelders 1 mit einem an der Schaltungsträgeraußenseite AS angeordneten Lichtempfänger 5, 52 mit Blende B gemäß der Erfindung.

Bei dieser Ausführungsform ist der Lichtempfänger 52 nun derart auf der Außenseite AS des Schaltungsträgers 3 angeordnet und ausgerichtet, dass zum einen seine Sensorfläche F parallel zur Außenseite AS des Schaltungsträgers 3 verläuft und zum anderen nur Streulicht vom Lichtsender 41 detektierbar ist. Zur Vermeidung von direktem Licht vom Lichtsender 41 ist zwischen Lichtsender 41 und Lichtempfänger 52 eine Blende B angeordnet.

FIG 5 zeigt eine weitere Ausführungsform mit einer am radialen Außenrand des Schaltungsträgers 3 angeordneten Streulichtanordnung gemäß der Erfindung.

In diesem Fall sind sowohl der Lichtsender 4, 41 als auch der Lichtempfänger 5, 53 in einem radialen Außenbereich des Schaltungsträgers 3 angeordnet. Sie sind derart unter einem Streulichtwinkel α zueinander ausgerichtet, dass ein Streulichtvolumen M2 gegenüberliegend zur Außenseite AS des Schaltungsträgers 3 (geometrisch) festgelegt ist. Die Hauptabstrahlrichtung HA des Lichtsenders 4, 41 und die Hauptempfangsrichtung HE des Lichtempfängers 5, 53 verlaufen parallel zur Außenseite AS des Schaltungsträgers 3. Im vorliegenden Beispiel ist das Streulichtvolumen M2 in etwa bei der geometrischen Mitte des Schaltungsträgers 3 festgelegt.

Die Streulichtanordnung weist einen Streulichtwinkel α in einem Bereich zwischen 110° und 145°. Er liegt im vorliegenden Beispiel bei 120°. Es handelt sich hierbei um eine Vorwärts-Streulichtanordnung. Alternativ kann die Streulichtanordnung einen Streulichtwinkel α in einem Bereich zwischen 35° bis 70° aufweisen. In einem solchen Fall handelt es sich dann um eine Rückwärts-Streulichtanordnung.

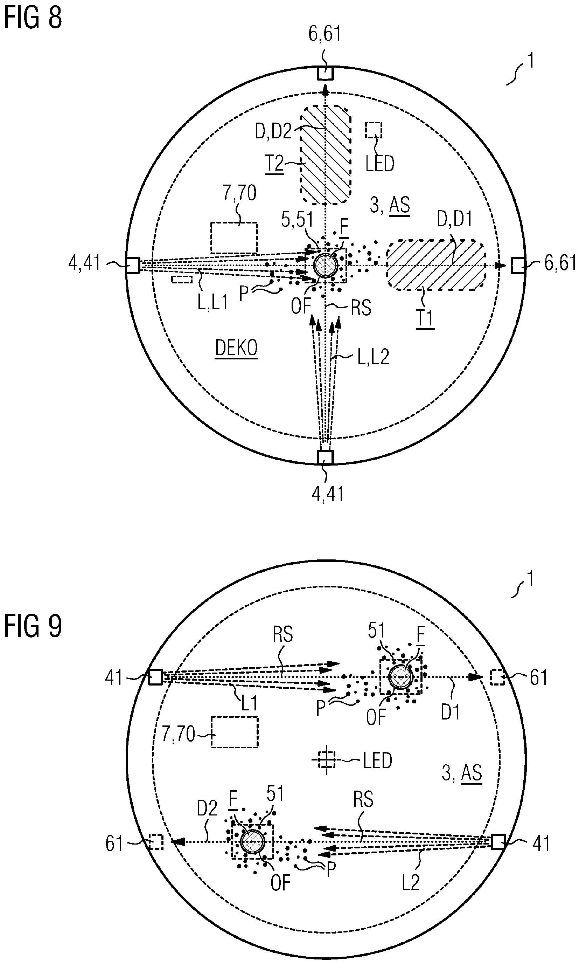

Die in FIG 5 gezeigte Ausführungsform kann darüber hinaus durch eine zweite Streulichtanordnung erweitert werden (siehe dazu auch FIG 8).

Im Falle von zwei Lichtsendern und einem einzigen Lichtsender kann der Streulichtrauchmelder zwei Streulichtanordnungen mit zwei Vorwärtsstreuwinkeln, mit zwei Rückwärtsstreuwinkeln oder mit einem Vorwärts- und einem Rückwärtsstreuwinkel aufweisen, jeweils mit einem gemeinsamen Streulichtzentrum. Mit anderen Worten schneiden sich dann vorzugsweise die Hauptabstrahlrichtungen der beiden Lichtsender und die Hauptempfangsrichtung des Lichtempfängers in einem Punkt, d.h. in der Mitte des Streulichtvolumens.

Die beiden Lichtsender sind vorzugsweise LEDs. Sie können monochromatisches Licht mit gleicher Wellenlänge oder mit voneinander verschiedener Wellenlänge aussenden, wie z.B. blaues Licht, grünes Licht, rotes Licht oder infrarotes Licht.

Im Falle unterschiedlichen monochromatischen Lichts und bei gleichem Streulichtwinkel ist dann durch die Steuer- und Auswerteeinheit mittels geeigneter Auswertesoftware die Bestimmung der Rauchpartikelgröße möglich.

Im Falle von ausgesandtem Licht gleicher Wellenlängen bei unterschiedlichem Streulichtwinkel, wie z.B. bei einem Vorwärtsstreulichtwinkel und einem Rückwärtsstreulichtwinkel, ist dann durch die Steuer- und Auswerteeinheit mittels geeigneter Auswertesoftware die Bestimmung des Rauchtyps möglich.

Im Falle von zwei Lichtempfängern und einem einzigen Lichtsender kann der Streulichtrauchmelder gleichfalls wieder zwei Streulichtanordnungen mit zwei Vorwärtsstreuwinkeln, mit zwei Rückwärtsstreuwinkeln oder mit einem Vorwärts- und einem Rückwärtsstreuwinkel aufweisen, jeweils mit einem gemeinsamen Streulichtzentrum. Mit anderen Worten schneiden sich dann vorzugsweise die Hauptempfangsrichtungen der beiden Lichtempfänger und die Hauptabstrahlrichtung des Lichtsenders in einem Punkt, d.h. in der Mitte des Streulichtvolumens.

Die beiden Lichtempfänger sind vorzugsweise Photodioden. Sie können jeweils für monochromatisches Licht unterschiedlicher Wellenlänge sensitiv sein, wie z.B. für blaues Licht, grünes Licht, rotes Licht oder infrarotes Licht, wobei dann der Lichtsender 41 zumindest Licht mit diesen unterschiedlichen Wellenlängen aussendet. Der Lichtsender 41 kann Zweifarben-LED sein. Sie kann auch eine weißleuchtende LED sein.

Auch in diesem Fall ist bei gleichen oder unterschiedlichen Streulichtwinkeln durch die Steuer- und Auswerteeinheit mittels geeigneter Auswertesoftware die Bestimmung der Rauchpartikelgröße und/oder die Bestimmung des Rauchtyps möglich.

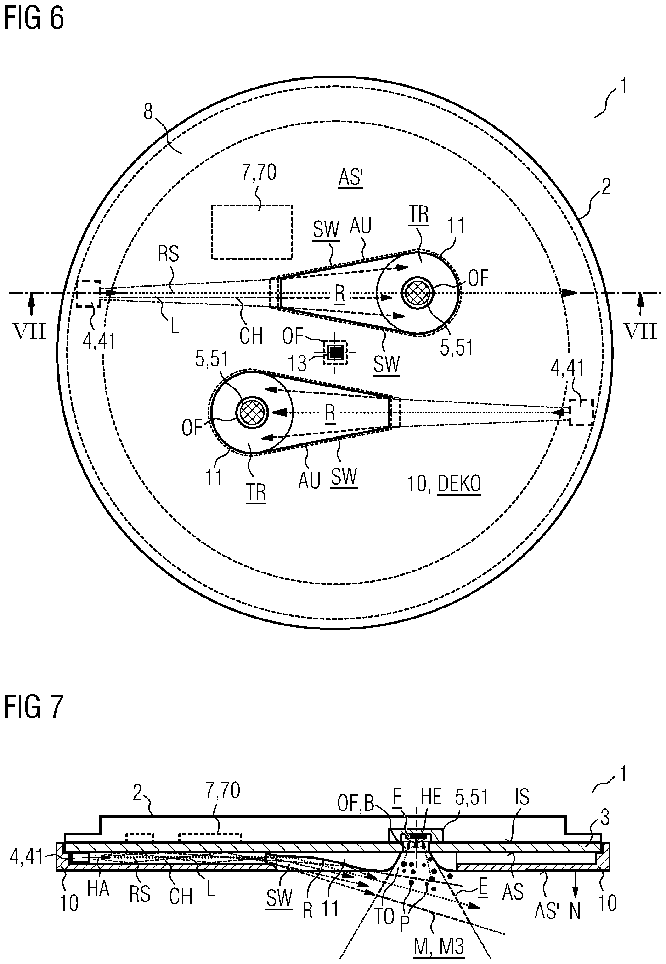

FIG 6 zeigt eine Ausführungsform mit Schutzabdeckung 10 und mit einer Aussparung AU für ein Lichtausleit-/Trichterelement 11 gemäß der Erfindung.

Im vorliegenden Beispiel weist der gezeigte Streulichtrauchmelder 1 bereits zwei Streulichtanordnungen mit jeweils einem Lichtsender 41, einem Lichtempfänger 51 und einem dazwischen in einer Aussparung AU angeordneten Lichtausleit-/Trichterelement 11.

Generell ermöglicht eine doppelte Streulichtanordnung eine höhere Fehlalarmsicherheit gegenüber Störungen bei einer der beiden Streulichtanordnungen, wie z.B. durch Fliegen oder Insekten.

In der Draufsicht auf den gezeigten Streulichtrauchmelder 1 ist die dem Betrachter zugewandte flächige Schutzabdeckung 10 zu sehen, die derart beabstandet zur Außenseite AS des Schaltungsträgers 3 angeordnet ist, dass zwischen der Außenseite AS des Schaltungsträgers 3 und einer gegenüberliegenden Innenseite der Schutzabdeckung 10 ein Lichtkanal CH für das vom Lichtsender 4 ausgesandte Lichtbündel L resultiert (siehe dazu auch FIG 7). Mit AS' ist hier die Außenseite der Schutzabdeckung 10 bezeichnet und mit N die Flächennormale der Schutzabdeckung 10, die parallel zur Flächennormale des Schaltungsträgers 3 ist. Die Schutzabdeckung 10 ist vorzugsweise lichtdicht. Sie kann zugleich eine Dekorplatte DEKO sein. Die beiden Lichtausleit-/Trichterelemente 11 weisen jeweils einen Lichttrichter TR für den Lichtempfänger 5, 51 sowie ein sich daran anschließendes Lichtausleitteil R zum Ausleiten des vom Lichtsender 4, 41 stammenden, im Lichtkanal CH verlaufenden Lichtbündels L auf. Das Lichtausleitteil R ist derart ausgestaltet, dass das ausgeleitete Lichtbündel L über den Lichttrichter TR hinweg in die Umgebung des Streulichtrauchmelders verläuft (siehe dazu FIG 7). Das Lichtausleitteil R ist im Sinne einer Rampe ausgeführt.

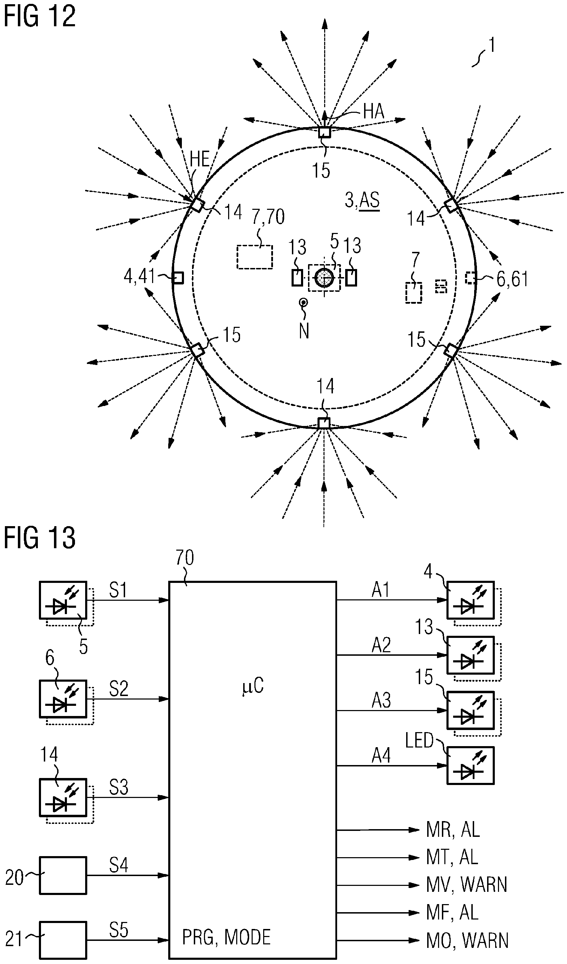

Mit SW sind zwei Seitenwände bezeichnet, die im vorliegenden Beispiel zu beiden Seiten der "Rampe" und senkrecht zur Außenseite AS' der Schutzabdeckung 10. Die Seitenwände 10 dienen gleichfalls zum Schutz gegenüber Verschmutzungen. Die Seitenwände können alternativ integraler Bestandteil der Schutzabdeckung 10 selbst sein. Mit TO ist die Trichteröffnung, mit E der optische Erfassungsbereich der gezeigten Anordnung und mit 13 ein erster Umgebungslichtsender für die Realisierung einer Umgebungsüberwachung. Letztere wird im Beispiel der FIG 12 und FIG 13 erläutert.

FIG 7 zeigt das Beispiel gemäß FIG 6 in einer Schnittdarstellung entlang der dortigen Schnittlinie VII-VII.

In dieser Darstellung ist der Verlauf des parallel zur Außenseite AS des Schaltungsträgers 3 ausgesandten Lichtbündels L sowie der Verlauf im Lichtkanal CH und die folgende Ausleitung über den Lichtempfänger 51 hinweg im Detail erkennbar. Zugleich ist der Lichtsender 41 durch die lichtdichte Schutzabdeckung 10 gegenüber mechanischen Einwirkungen und Verschmutzungen geschützt.

FIG 8 zeigt eine weitere Ausführungsform des Streulichtrauchmelders 1 mit einer erfindungsgemäßen benutzerseitigen Eingabemöglichkeit zur Betriebsartänderung.

Im Beispiel der dortigen Figur weist der Streulichtrauchmelder 1 zwei Streulichtanordnungen mit zwei Lichtsendern 41 und ein einem gemeinsamen Lichtempfänger 51 auf. Beide Lichtsender 41 sind dazu eingerichtet, vorzugsweise monochromatisches Licht in voneinander verschiedenen Wellenlängenbereichen auszusenden. Vorzugsweise sendet der eine Lichtsender 41 infrarotes oder rotes Licht und der andere Lichtsender 41 grünes, blaues oder UV-Licht aus. Der Lichtempfänger 51 ist für beide "Lichtfarben" sensitiv. Die beiden Lichtsender 41 werden vorzugsweise abwechselnd angesteuert. Die Steuer- und Auswerteeinheit 70 kann dann zur Bestimmung der Rauchart aus dem Verhältnis des den beiden Lichtsendern 41 zeitlich zugeordneten Lichtempfängersignals die Teilchengröße der detektierten Rauchpartikel P ermitteln.

Alternativ können beide Lichtsender 41 auch dazu eingerichtet sein, gleiches monochromatisches Licht auszusenden. Zwar liegt dann bei dieser Anordnung jeweils ein gleicher Streulichtwinkel zwischen Lichtsender 41 und Lichtempfänger 51 vor, jedoch liegen voneinander verschiedene Streulichtvolumen vor. Die beiden Lichtsender 41 werden wiederum vorzugsweise abwechselnd angesteuert. Die Steuer- und Auswerteeinheit 70 ist dazu eingerichtet, durch Vergleich der beiden Lichtempfängersignale das Vorhandensein von Störgrößen zu ermitteln, wie z.B. das Vorhandensein eines Insekts. Dies insbesondere dann, wenn sich beide Lichtempfängersignale in ihrer Amplitude deutlich und vor allem abrupt voneinander unterscheiden.

Gemäß der Erfindung ist dem jeweiligen Lichtsender 41 ein Direktlichtempfänger 6 gegenüberliegend angeordnet. Der Direktlichtempfänger 6 ist dabei auf den jeweiligen Lichtsender 41 zur Detektion von direktem Licht D, D1, D2 ausgerichtet. Mit L1 und L2 ist das jeweilige Lichtbündel bezeichnet, welches in Richtung zum gegenüberliegenden Direktlichtempfänger 61 verläuft. Zwischen dem Lichtempfänger 51 und dem jeweiligen Direktlichtempfänger 61 ist schraffiert ein Eingabefeld T1, T2 eingetragen. Das Eingabefeld T1, T2 kann auf der Außenseite AS des Schaltungsträgers 3 bzw. auf der gezeigten Dekorfolie DEKO graphisch als Eingabemöglichkeit für einen Benutzer hervorgehoben sein. Berührt ein Benutzer nun mit seinem Finger ein solches Eingabefeld T1, T2, so wird die Lichtstrecke zwischen Lichtsender 41 und zugehörigem gegenüberliegenden Direktlichtempfänger 61 unterbrochen. Wird der Finger zurückgezogen, so wird die Lichtstrecke wieder freigegeben. Die elektronische Steuer- und Auswerteeinheit 70 ist signaltechnisch mit den Lichtsendern 41 und den Direktlichtempfängern 61 verbunden. Sie ist dazu eingerichtet, den jeweiligen Lichtsender 41 anzusteuern sowie das vom zugehörigen Direktlichtempfänger 61 stammende Signal zu erfassen und auf eine Folge von Signalsprüngen mit großen Signaländerungen hin auszuwerten. Wie eingangs beschrieben, ist auf diese Weise eine Änderung der Betriebsart des Streulichtrauchmelders 1 möglich. Im vorliegenden Fall stehen sogar zwei Eingabemöglichkeiten zur Verfügung, die auch miteinander kombiniert werden können.

FIG 9 zeigt eine Ausführungsform des Streulichtrauchmelders 1 gemäß FIG 1 mit zwei erfindungsgemäßen Streulichtanordnungen mit je einem Lichtsender 41 und Lichtempfänger 61. Dadurch ist eine höhere Fehlalarmsicherheit gegenüber Störungen bei einer der beiden Streulichtanordnungen, wie z.B. durch Fliegen oder Insekten, vorteilhaft möglich. Mit LED ist eine Indikator-Leuchtdiode im Sinne einer Betriebsbereit-Anzeige bezeichnet. Diese zeigt durch wiederholtes kurzzeitiges Aufblitzen, wie z.B. alle 30 Sekunden, die Funktionsbereitschaft des Streulichtrauchmelders 1 an.

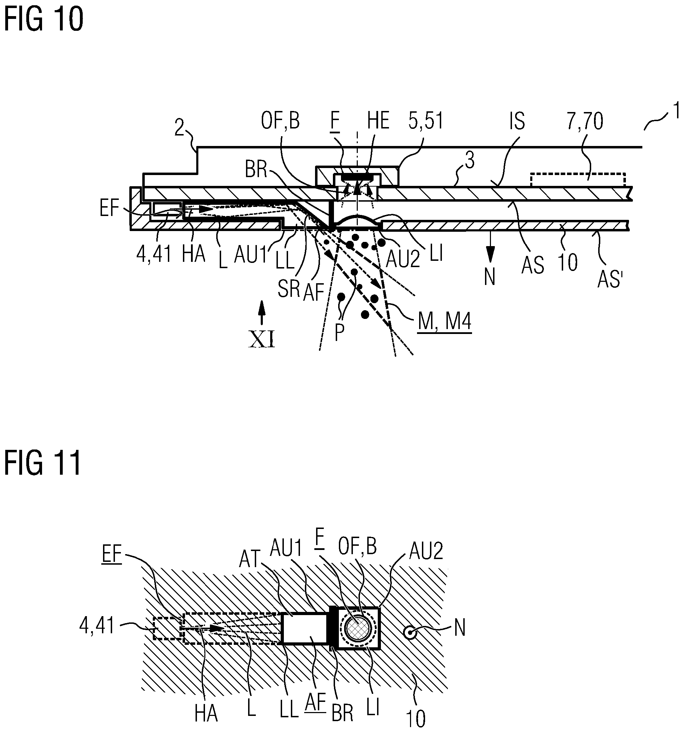

FIG 10 zeigt eine weitere Ausführungsform des Streulichtrauchmelders 1 in einer Schnittdarstellung mit einer Schutzabdeckung 10 und mit einem Lichtleiterelement LL für eine Lichtauskopplung gemäß der Erfindung.

Der Streulichtrauchmelder 1 weist eine zur Außenseite AS des Schaltungsträgers 3 beabstandete flächige (lichtdichte) Schutzabdeckung 10 auf. Der Abstand liegt vorzugsweise im Bereich von 3 bis 10 mm. Durch die Beabstandung resultiert ein Aufnahmeraum für ein an den Lichtsender 41 angrenzendes Lichtleiterelement LL. Das Lichtleiterelement LL ist zum Weiterleiten des vom Lichtsender 41 ausgesandten Lichtbündels L vorgesehen ist. Es ist im Sinne eines Prisma realisiert. Der Lichtsender 41 ist wiederum eine Sidelooker-LED. Sie ist zum Einkoppeln des ausgesandten Lichtbündels L dem Lichtleiterelement LL direkt gegenüberliegend angeordnet. Sie ist derart ausgerichtet, dass das ausgesandte Lichtbündel L senkrecht in eine vorzugsweise plane Einkoppelfläche EF des Lichtleiterelements LL einkoppelt.

Die Schutzabdeckung 10 weist außerdem eine (erste) Aussparung AU1 für ein Lichtausleitteil AT des Lichtleiterelements LL auf. Das Lichtleiterelement LL ist dabei derart ausgestaltet, dass das im Lichtleiterelement LL verlaufende Lichtbündel L an einer Austrittsfläche AF des Lichtausleitteils AT auskoppelt. Innerhalb des Lichtleiterelements LL trifft ein Teil des Lichtbündels L auf eine Schräge SR, sodass dieser Teil unter Totalreflexion in Richtung zur Austrittsfläche AF hin reflektiert wird. Das Lichtleiterelement LL schließt vorzugsweise bündig mit der Außenseite A' der Schutzabdeckung 10 ab. Die Austrittsfläche AF ist zudem vorzugsweise plan ausgebildet. Das ausgekoppelte Lichtbündel L verläuft dann weiter über einen Empfangsbereich E des Lichtempfängers 51 hinweg in die Umgebung des Streulichtrauchmelders 1.

Benachbart zur ersten Aussparung AU1 ist in der Schutzabdekkung 10 noch eine weitere (zweite) Aussparung AU2 vorhanden, welche zur Aufnahme einer optischen Linse LI vorgesehen ist. Zwischen den beiden Aussparungen AU1, AU2 ist außerdem eine lichtdichte Barriere BR vorhanden, um zu verhindern, dass ein Teil des Lichtbündels L direkt zum Lichtempfänger 51 gelangt. Der Lichtempfänger 51 selbst ist wieder auf der Innenseite IS des Schaltungsträgers 3 angeordnet, wobei seine Sensorfläche F einer Öffnung OF im Schaltungsträger 3 gegenüberliegt, die zugleich als Blende B fungiert.

FIG 11 zeigt eine Aufsicht auf den Streulichtrauchmelder 1 gemäß FIG 10 in eingetragener Blickrichtung XI.

In dieser Darstellung sind die zwei benachbarten viereckigen Aussparungen AU1, AU2 zu sehen, die durch die Barriere B voneinander getrennt sind.

Die in der zweiten Aussparung AU2 aufgenommene Linse LI kann auch integraler Bestandteil des Lichtempfängers 51 selbst sein. In diesem Fall ist der Lichtempfänger vorzugsweise auf der Außenseite AS des Schaltungsträgers 3 angeordnet. Die Linse LI ist dann in optischer Hinsicht dem Lichtempfänger vorgeschaltet.

FIG 12 zeigt eine weitere Ausführungsform des erfindungsgemäßen Streulichtrauchmelders 1 mit einer Umgebungsüberwachung auf strömungsabschirmende Objekte hin.

Auf der Außenseite AS des Schaltungsträgers 3 sind beispielhaft zwei erste Umgebungslichtsender 13 vorhanden, die Licht weg von der Außenseite AS und im Wesentlichen senkrecht zu dieser in die Umgebung des Streulichtrauchmelders 1 abstrahlen. Die ersten Umgebungslichtsender 13 strahlen Licht vorzugsweise im nicht sichtbaren Infrarotbereich ab und vorzugsweise mit einem breiten, halbkugeligen Abstrahlbereich.

Auf der Außenseite AS des Schaltungsträgers 3 sind in einem radial außenliegenden Randbereich noch drei zweite Umgebungslichtsender 15 vorhanden, die Licht im Wesentlichen radial weg vom Streulichtrauchmelder 1 in die Umgebung des Streulichtrauchmelders 1 abstrahlen. Auch die zweiten Umgebungslichtsender 15 strahlen Licht vorzugsweise im nicht sichtbaren Infrarotbereich ab. Der Abstrahlbereich ist wie gezeigt vorzugsweise fächerartig, um möglichst viel Licht in seitlicher Richtung zum Streulichtrauchmelder 1 auszusenden.

Es müssen nicht notwendigerweise erste und zweite Umgebungslichtsender 13, 15, wie im vorliegenden Beispiel gezeigt, vorhanden sein.

Weiterhin sind in dem radial außenliegenden Randbereich drei Umgebungslichtempfänger 14 angeordnet, die zur Detektion von Umgebungslicht aus im Wesentlichen radialer Richtung hin zum Streulichtrauchmelder 1 vorgesehen sind. Sie sind in Umfangsrichtung gesehen zwischen den zweiten Umgebungslichtsendern 15 angeordnet. Die zweiten Umgebungslichtsender 15 und die Umgebungslichtempfänger 14 können auch in einem optoelektronischen Bauelement zusammengefasst sein. In diesem Fall resultieren dann sechs in Umfangsrichtung verteilt angeordnete Umgebungslichtsender/-empfänger. Es müssen abgesehen vom Lichtempfänger 5 nicht zwingend notwendigerweise die Umgebungslichtempfänger 14 und/oder die Direktlichtempfänger 6, wie im vorliegenden Beispiel gezeigt, vorhanden sein.

Weiterhin weist der Streulichtrauchmelder 1 eine elektronische Steuer- und Auswerteeinheit 70 auf, welche signaltechnisch mit den Umgebungslichtsendern 13, 15, mit dem Lichtempfänger 5 sowie mit den Umgebunglichtempfängern 14 verbunden ist. Die Steuer- und Auswerteeinheit 70 ist dazu eingerichtet, die jeweiligen Umgebungslichtsender 13, 15 anzusteuern sowie die vom Lichtempfänger 5, von den Umgebungslichtempfängern 14 und von den Direktlichtempfängern 6 stammenden elektrischen Signale, die mit den an Gegenständen reflektierten Lichtimpulsen korrelieren, zu erfassen, zeitlich auszuwerten und eine Warnmeldung MO, WARN auszugeben, wenn ein detektierter Gegenstand innerhalb einer vorgegebenen Distanz um den Streulichtrauchmelder 1 liegt und einen vorgegebenen Mindestsignalpegel überschreitet.

Vorzugsweise senden die Umgebungslichtsender 13, 15 zur verbesserten Störfestigkeit moduliertes Licht aus, wie z.B. im Bereich von mehreren KHz bis MHz. Dies kann z.B. durch die Steuer- und Auswerteeinheit 70 erfolgen. In entsprechender Weise werden die vom Lichtempfänger 5, von den Umgebungslichtempfängern 14 und von den Direktlichtempfängern 6 stammenden Empfangssignale S1-S3 auf diese Modulationsfrequenz hin gefiltert, wie z.B. mittels eines durch die Steuer- und Auswerteeinheit 70 realisierten digitalen Filters. Die Filter können auch passive oder elektronische Bauteile sein.

Bei höheren Frequenzen im Bereich von als 1 MHz kann auch die Phaseninformation des empfangenen Signals dazu verwendet werden, um eine "Time-of-flight"-Analyse durchzuführen. Mit anderen Worten wird die Laufzeit und somit der Weg eines in die Umgebung gesendeten Lichtsignals ermittelt. Somit wäre eine noch genauere Eingrenzung der Entfernung des störenden Objekts denkbar. Die Entfernung kann somit basierend auf der Abnahme der Amplitude eines Empfangssignals S1-S3 aufgrund von Reflexionen und/oder basierend auf der Phasendifferenz zwischen einem gesendeten Lichtsignal und einem Empfangssignal S1-S3 im Sinne einer Laufzeitmessung ermittelt werden.

FIG 13 zeigt ein Blockschaltbild des erfindungsgemäßen Streulichtrauchmelders 1 mit einer prozessorgestützten Steuer- und Auswerteeinheit 70 und mit einer Vielzahl angeschlossener Lichtsender 4, 13, 15, LED und Lichtempfänger 5, 6, 14.

Mit PRG ist ein Computerprogramm bezeichnet, welches zur Durchführung der zuvor beschriebenen Rauchdetektion und zur Umgebungsüberwachung geeignet ist. Mit MODE sind die verschiedenen, benutzerseitig auswählbaren Betriebsarten bezeichnet. Diese können entsprechend der jeweiligen Betriebsart MODE unterschiedliche Parametersätze umfassen.

Der Streulichtrauchmelder 1 kann gemäß der Erfindung weiterhin einen Wärmesensor 20 aufweisen, wie z.B. einen PIR- oder Pyrosensor, oder einen Thermopile- oder Mikrobolometer-Wärmesensor 20, der signaltechnisch mit der elektronischen Steuer- und Auswerteeinheit 70 verbunden ist. Letztere kann dazu eingerichtet sein, ein vom Wärmesensor 20 erfasstes Signal S4 auf das Vorhandensein von für offenes Feuer charakteristischen Flackerfrequenzen hin auszuwerten und bei Vorliegen eine Flammenmeldung MF oder einen Brandalarm AL auszugeben. Der Streulichtrauchmelder 1 kann weiterhin einen Temperatursensor 21 aufweisen, der signaltechnisch mit der elektronischen Steuer- und Auswerteeinheit 70 verbunden ist. Letztere kann dazu eingerichtet sein, ein vom Temperatursensor 21 erfasstes Signal S5 auf das Vorhandensein ein unzulässig hohen Temperatur hin zu überwachen und bei Vorliegen einer solchen eine Übertemperaturmeldung MT oder einen Brandalarm AL auszugeben. Mit MR können basierend auf dem ausgeführten Computerprogramm PRG mittels der Steuer- und Auswerteinheit 70 weitere Meldungen ausgegeben werden, wie z.B. eine Rauchmeldung MR, eine Verschmutzungsmeldung MV sowie eine Objektmeldung, falls sich ein als unzulässig erkanntes Objekt in der Umgebung befindet.

### Bezugszeichenliste

- 1: Streulichtrauchmelder
- 2: Gehäuseschale, Gehäuseteil, Aufnahme
- 3: Schaltungsträger, Leiterplatte
- 4, 41, 42: Lichtsender, LED, IRED
- 5, 51-53: Lichtempfänger, Photodiode, IR-Photodiode
- 6, 61, 62: Direktlichtempfänger, Photodiode, IR-Photodiode
- 7: Bauelemente
- 8: Ring, Aufnahmering
- 10: Schutzabdeckung
- 11: Lichtausleit-/Trichterelement
- 13: erster Umgebungslichtsender, LED
- 14: Umgebungslichtempfänger
- 15: zweiter Umgebungslichtsender, LED
- 20: Wärmesensor, Thermopile, Mikrobolometer, Pyrosensor
- 21: Temperatursensor
- 70: elektronische Steuer- und Auswerteeinheit, Verarbeitungseinheit, Mikrocontroller

- A1-A4: Ausgabesignale
- AF: Auskoppelfläche
- AL: Alarmmeldung
- AS: Außenseite des Schaltungsträgers
- AS': Außenseite einer Schutzabdeckung, einer Dekorplatte oder einer Dekorfolie
- AT: Lichtausleitteil
- AU, AU1, AU2: Aussparung
- B: Blende
- BR: Barriere
- CH: Lichtkanal
- D, D1, D2: Direktlichtstrahl, Direktlicht
- DEKO: Dekorplatte, Dekorfolie
- DO: Durchgangsöffnung
- E: Empfangsbereich, Empfangssektor
- EF: Einkoppelfläche
- F: Sensorfläche
- HA: Hauptabstrahlrichtung
- HE: Hauptempfangsrichtung
- IS: Innenseite des Schaltungsträgers
- K: Kontur, Innenkontur, reflektierende Kontur
- L, L1, L2: Lichtbündel
- LI: Linse
- LL: Lichtleitelement
- LED: optisches Anzeigeelement, Betriebsanzeige
- M, M1-M4: Streulichtvolumen, Streulichtzentrum, Messvolumen
- MF: Flammenmeldung
- MO: Objektmeldung
- MR: Rauchmeldung
- MT: Übertemperaturmeldung
- MV: Verschmutzungsmeldung
- MODE: Betriebsart
- N: Normale, Normalenrichtung
- OF: optisches Fenster, Öffnung, Loch, Bohrung
- P: Partikel, Rauchpartikel
- PRG: Computerprogramm
- R: Lichtausleitteil, Rampe
- RS: Richtungsstrahl, Lichtstrahl in Vorzugsrichtung
- S1-S5: Signale, Empfangssignale
- SR: Schräge
- SW: Seitenwand
- T1, T2: Eingabefeld, Touchbereich
- TO: Trichteröffnung
- TR: Lichttrichter
- WARN: Warnmeldung
- α: Streulichtwinkel

## Patentansprüche

1. Streulichtrauchmelder, mit einer Gehäuseschale (2) und einem daran aufgenommenen Schaltungsträger (3), wobei auf dem Schaltungsträger (3) zumindest ein Lichtsender (4) und ein Lichtempfänger (5) angeordnet sind, wobei der Schaltungsträger (3) eine der Gehäuseschale (2) gegenüberliegende Innenseite (IS) und eine der Innenseite (IS) gegenüberliegende Außenseite (AS) aufweist, wobei der Lichtsender (4) zum Aussenden eines Lichtbündels (L) mit einem Richtungsstrahl (RS) ausgebildet ist, wobei der Lichtsender (4) und der Lichtempfänger (5) in einer Streulichtanordnung angeordnet sind, und wobei ein Teil der Wegstrecke des Richtungsstrahls (RS) zwischen Lichtsender (4) und dem Streulichtvolumen (M) parallel zur Außenseite (AS) des Schaltungsträgers (3) verläuft, **dadurch gekennzeichnet, dass** die Streulichtanordnung zur Rauchdetektion in einem außerhalb des Streulichtrauchmelders im Freien liegenden Streulichtvolumen (M) vorgesehen ist.

2. Streulichtrauchmelder nach Anspruch 1, wobei der Lichtsender (4) derart auf dem Schaltungsträger (3) angeordnet und ausgerichtet ist, dass das von ihm ausgesandte Lichtbündel (L) vom Rand des Schaltungsträgers (3) in Richtung zu einem gegenüberliegenden Rand des Schaltungsträgers (3) verläuft.

3. Streulichtrauchmelder nach Anspruch 1 oder 2, wobei der Lichtempfänger (5, 51) gegenüber direktem Licht vom Lichtsender (4) abgeschirmt ist und wobei seine Hauptempfangsrichtung (HE) weg von der Außenseite (AS) des Schaltungsträgers (3) zeigt.

4. Streulichtrauchmelder nach Anspruch 3, wobei der Lichtempfänger (5, 51) eine Sensorfläche (F) aufweist, wobei ein optisches Fenster (OF) im Schaltungsträger (3) für den Lichtempfänger (51) vorgesehen ist und wobei der Lichtempfänger (51) derart auf der Innenseite (IS) des Schaltungsträgers (3) angeordnet und ausgerichtet ist, dass die Sensorfläche (F) parallel zur Innenseite (IS) des Schaltungsträgers (3) verläuft und dem optischen Fenster (OF) gegenüberliegt, sodass Streulicht vom Lichtsender (4) durch das als Blende (B) fungierende optische Fenster (OF) hindurch detektierbar ist.

5. Streulichtrauchmelder nach Anspruch 4, wobei der Lichtempfänger (5, 51) eine Photodiode mit einem Flip-Chip-Gehäuse oder mit einem Reverse-Gullwing-Gehäuse für eine direkte Oberflächenmontage auf dem Schaltungsträger (3) ist.

6. Streulichtrauchmelder nach Anspruch 3, wobei der Lichtempfänger (5, 52) eine Sensorfläche (F) aufweist, wobei der Lichtempfänger (52) derart auf der Außenseite (AS) des Schaltungsträgers (3) angeordnet und ausgerichtet ist, dass zum einen die Sensorfläche (F) parallel zur Außenseite (AS) des Schaltungsträgers (3) verläuft und zum anderen Streulicht vom Lichtsender (4) detektierbar ist.

7. Streulichtrauchmelder nach einem der vorherigen Ansprüche, wobei der Schaltungsträger (3) zur Anbringung einer Dekorplatte (DEKO) oder einer Dekorfolie auf der Außenseite (AS) des Schaltungsträgers (3) vorgesehen oder ausgebildet ist, und wobei die Dekorplatte (DEKO) oder die Dekorfolie gegebenenfalls Aussparungen oder transparente Fenster für den Lichtempfänger (5, 51, 52) und/oder für weitere optoelektronische Bauelemente (15, LED) aufweist.

8. Streulichtrauchmelder nach einem der vorherigen Ansprüche, wobei auf dem Schaltungsträger (3) ein Direktlichtempfänger (6) angeordnet ist, wobei der Direktlichtempfänger (6) auf den Lichtsender (4) zur Detektion von direktem Licht (D) ausgerichtet ist, wobei sich das Streulichtvolumen (M) zwischen diesem Lichtsender (4) und dem Direktlichtempfänger (6) befindet und wobei der Direktlichtempfänger (6) zur Verschmutzungsüberwachung und/oder zur Überwachung einer Helligkeitsabnahme des Lichtsenders (4) vorgesehen ist.

9. Streulichtrauchmelder nach einem der vorherigen Ansprüche, wobei der Lichtempfänger (5, 53) in einem Randbereich des Schaltungsträgers (3) und unter einem Streulichtwinkel (α) zum Lichtsender (4) angeordnet und ausgerichtet ist, wobei sich das so gebildete Streulichtvolumen (M, M2) gegenüberliegend zur Außenseite (AS) des Schaltungsträgers (3) befindet und wobei eine Hauptempfangsrichtung (HE) des Lichtempfängers (5, 53) parallel zu dieser Außenseite (AS) ist.

10. Streulichtrauchmelder nach Anspruche 8 oder 9, wobei der Lichtempfänger (5, 53) und/oder der Direktlichtempfänger (6) eine "Sidelooker"-Photodiode ist.

11. Streulichtrauchmelder nach einem der vorigen Ansprüche, wobei auf dem Schaltungsträger (3) ein Direktlichtempfänger (6) angeordnet ist, wobei der Direktlichtempfänger (6) auf den Lichtsender (4) zur Detektion von direktem Licht (D) vom Lichtsender (4) ausgerichtet ist, und wobei der Streulichtrauchmelder eine elektronische Steuer- und Auswerteeinheit (70) aufweist, welche signaltechnisch mit dem Lichtsender (4) und dem Direktlichtempfänger (6) verbunden ist und welche dazu eingerichtet ist, den Lichtsender (4) anzusteuern sowie das vom Direktlichtempfänger (6) stammende Signal (S2) zu erfassen und auf eine Folge von Signalsprüngen mit großen Signaländerungen hin auszuwerten, und wobei die Steuer- und Auswerteeinheit (70) dazu eingerichtet ist, derartige Signalfolgen mit zumindest einer vorgegebenen benutzerseitigen Befehlsfolge zu vergleichen und im Fall einer gültigen Befehlsfolge den Streulichtrauchmelder in eine der Befehlsfolge zugeordneten Betriebsart (MODE) umzuschalten.

12. Streulichtrauchmelder nach einem der Ansprüche 1 bis 10, mit einer an der Außenseite (AS) des Schaltungsträgers (3) angeordneten, zur Abdeckung des Schaltungsträgers (3) vorgesehenen flächigen Schutzabdeckung (10), wobei die Schutzabdeckung (10) zur Außenseite (AS) des Schaltungsträgers (3) beabstandet angeordnet ist, sodass zwischen der Außenseite (AS) des Schaltungsträgers (3) und einer gegenüberliegenden Innenseite der Schutzabdeckung (10) ein Lichtkanal (CH) für das vom Lichtsender (4) ausgesandte Lichtbündel (L) resultiert, wobei die Schutzabdeckung (10) eine Aussparung (AU) für ein Lichtausleit-/Trichterelement (11) aufweist, wobei das Lichtausleit-/Trichterelement (11) einen Lichttrichter (TR) für den Lichtempfänger (5) sowie ein sich daran anschließendes Lichtausleitteil (R) zum Ausleiten des vom Lichtsender (4) im Lichtkanal (CH) verlaufenden Lichtbündels (L) aufweist und wobei das Lichtausleitteil (R) derart ausgestaltet ist, dass das ausgeleitete Lichtbündel (L) über den Lichttrichter (TR) hinweg in die Umgebung des Streulichtrauchmelders verläuft.

13. Streulichtrauchmelder nach einem der Ansprüche 1 bis 10, mit einer an der Außenseite (AS) des Schaltungsträgers (3) angeordneten, zur Abdeckung des Schaltungsträgers (3) vorgesehenen flächigen Schutzabdeckung (10), wobei die Schutzabdeckung (10) zur Außenseite (AS) des Schaltungsträgers (3) beabstandet angeordnet ist, sodass zwischen der Außenseite (AS) des Schaltungsträgers (3) und einer gegenüberliegenden Innenseite der Schutzabdeckung (10) ein Aufnahmeraum für ein an den Lichtsender (4) angrenzendes Lichtleiterelement (LL) zum Weiterleiten des vom Lichtsender (4) ausgesandten Lichtbündels (L) resultiert, wobei die Schutzabdeckung (10) eine Aussparung (AU) für ein Lichtausleitteil (AT) des Lichtleiterelements (LL) aufweist, wobei das Lichtleiterelement (LL) derart ausgestaltet ist, dass das im Lichtleiterelement (LL) verlaufende Lichtbündel (L) an einer Austrittsfläche (AF) des Lichtausleitteils (AT) auskoppelt und über einen Empfangsbereich (E) des Lichtempfängers (5) hinweg in die Umgebung des Streulichtrauchmelders verläuft.

14. Streulichtrauchmelder nach einem der vorherigen Ansprüche, wobei der Lichtsender (4) eine "Sidelooker"-LED ist.

15. Streulichtrauchmelder nach einem der vorigen Ansprüche,
- wobei auf der Außenseite (AS) des Schaltungsträgers (3) zumindest ein erster Umgebungslichtsender (13) zum Aussenden von Licht weg von der Außenseite (AS) und im Wesentlichen senkrecht zu dieser in die Umgebung des Streulichtrauchmelders angeordnet ist und/oder
- wobei auf der Außenseite (AS) des Schaltungsträgers (3) in einem radial außenliegenden Randbereich mehrere zweite Umgebungslichtsender (15) zum Aussenden von Licht im Wesentlichen radial weg vom Streulichtrauchmelder in die Umgebung des Streulichtrauchmelders angeordnet sind, und
- wobei auf dem Schaltungsträger (3) der Lichtempfänger (5) angeordnet ist, dessen Hauptempfangsrichtung (HE) weg von der Außenseite (AS) des Schaltungsträgers (3) zeigt und senkrecht zu dieser ist, und
- wobei auf der Außenseite (AS) des Schaltungsträgers (3) in dem radial außenliegenden Randbereich gegebenenfalls mehrere Umgebungslichtempfänger (14) zur Detektion von Umgebungslicht aus im Wesentlicher radialer Richtung hin zum Streulichtrauchmelder angeordnet sind, und
- wobei der Streulichtrauchmelder eine elektronische Steuer- und Auswerteeinheit (70) aufweist, welche signaltechnisch mit den Umgebungslichtsendern (13, 15) und dem Lichtempfänger (5) sowie gegebenenfalls mit den Umgebunglichtempfängern (14) verbunden ist, und wobei die Steuer- und Auswerteeinheit (70) eingerichtet ist, die jeweiligen Umgebungslichtsender (13, 15) zur Aussendung von insbesondere modulierten Lichtimpulsen anzusteuern und wobei die Steuer- und Auswerteeinheit (70) dazu eingerichtet ist, die vom Lichtempfänger (5) und gegebenenfalls von den Umgebungslichtempfängern (14) stammenden Signale (S1-S3), die mit den an Gegenständen reflektierten modulierten Lichtimpulsen korrelieren, zu erfassen, zeitlich auszuwerten und eine Warnmeldung (MO, WARN) auszugeben, wenn ein detektierter Gegenstand innerhalb einer vorgegebenen Distanz um den Streulichtrauchmelder liegt und einen vorgegebenen Mindestsignalpegel überschreitet.

16. Streulichtrauchmelder nach einem der vorigen Ansprüche, wobei auf dem Schaltungsträger (3) ein Wärmesensor (20), insbesondere ein Thermopile- oder Mikrobolometer-Wärmesensor, angeordnet ist, wobei der Streulichtrauchmelder eine elektronische Steuer- und Auswerteeinheit (70) aufweist, welche signaltechnisch mit dem Wärmesensor (20) verbunden ist und welche dazu eingerichtet ist, ein vom Wärmesensor (20) erfasstes Signal (S4) auf das Vorhandensein von für offenes Feuer charakteristischen Flackerfrequenzen hin auszuwerten und bei Vorliegen eine Flammenmeldung (MF, AL) auszugeben.

## Claims

1. Scattered light smoke detector having a housing shell (2) and a circuit substrate (3) accommodated thereon, wherein at least one light emitter (4) and one light receiver (5) are arranged on the circuit substrate (3), wherein the circuit substrate (3) has an inner face (IS) disposed opposite the housing shell (2) and an outer face (AS) disposed opposite the inner face (IS), wherein the light emitter (4) is embodied for emitting a light beam (L) having a directional ray (RS), wherein the light emitter (4) and the light receiver (5) are arranged in a scattered light array, and wherein a part of the path travelled by the directional ray (RS) between light emitter (4) and the scattered light volume (M) runs parallel to the outer face (AS) of the circuit substrate (3), **characterised in that** the scattered light array is provided for smoke detection in a scattered light volume (M) located in the open air outside of the scattered light smoke detector.

2. Scattered light smoke detector according to claim 1, wherein the light emitter (4) is arranged and aligned on the circuit substrate (3) in such a way that the light beam (L) emitted by it runs from the edge of the circuit substrate (3) in the direction of an opposite edge of the circuit substrate (3).

3. Scattered light smoke detector according to claim 1 or 2, wherein the light receiver (5, 51) is shielded against direct light from the light emitter (4) and wherein its main receiving direction (HE) points away from the outer face (AS) of the circuit substrate (3).

4. Scattered light smoke detector according to claim 3, wherein the light receiver (5, 51) has a sensor surface (F), wherein an optical window (OF) is provided in the circuit substrate (3) for the light receiver (51) and wherein the light receiver (51) is arranged and aligned on the inner face (IS) of the circuit substrate (3) in such a way that the sensor surface (F) extends parallel to the inner face (IS) of the circuit substrate (3) and is located opposite the optical window (OF) such that scattered light from the light emitter (4) can be detected through the optical window (OF) acting as an aperture (B).

5. Scattered light smoke detector according to claim 4, wherein the light receiver (5, 51) is a photodiode housed in a flip-chip package or housed in a reverse-gullwing package for direct surface mounting on the circuit substrate (3).

6. Scattered light smoke detector according to claim 3, wherein the light receiver (5, 52) has a sensor surface (F), wherein the light receiver (52) is arranged and aligned on the outer face (AS) of the circuit substrate (3) in such a way that on the one hand the sensor surface (F) runs parallel to the outer face (AS) of the circuit substrate (3) and on the other hand scattered light can be detected by the light emitter (4).

7. Scattered light smoke detector according to one of the preceding claims, wherein the circuit substrate (3) is provided or embodied for attaching a decorative plate (DEKO) or a decorative film on the outer face (AS) of the circuit substrate (3), and wherein if necessary the decorative plate (DEKO) or the decorative film has cutouts or transparent windows for the light receiver (5, 51, 52) and/or for further optoelectronic components (15, LED).

8. Scattered light smoke detector according to one of the preceding claims, wherein a direct light receiver (6) is arranged on the circuit substrate (3), wherein the direct light receiver (6) is aligned to the light emitter (4) for the purpose of detecting direct light (D), wherein the scattered light volume (M) is located between said light emitter (4) and the direct light receiver (6), and wherein the direct light receiver (6) is provided for contamination monitoring and/or for monitoring a decrease in brightness of the light emitter (4).

9. Scattered light smoke detector according to one of the preceding claims, wherein the light receiver (5, 53) is arranged and aligned in an edge region of the circuit substrate (3) and at a scattered light angle (α) to the light emitter (4), wherein the thus formed scattered light volume (M, M2) is located opposite the outer face (AS) of the circuit substrate (3), and wherein a main receiving direction (HE) of the light receiver (5, 53) is parallel to said outer face (AS).

10. Scattered light smoke detector according to claims 8 or 9, wherein the light receiver (5, 53) and/or the direct light receiver (6) is a "sidelooker" photodiode.

11. Scattered light smoke detector according to one of the preceding claims, wherein a direct light receiver (6) is arranged on the circuit substrate (3), wherein the direct light receiver (6) is aligned to the light emitter (4) for the purpose of detecting direct light (D) from the light emitter (4), and wherein the scattered light smoke detector has an electronic control and evaluation unit (70) which is connected for signal communication purposes to the light emitter (4) and the direct light receiver (6) and which is configured to activate the light emitter (4) as well as to capture the signal (S2) originating from the direct light receiver (6) and to evaluate the same with respect to a sequence of signal jumps having great signal changes, and wherein the control and evaluation unit (70) is configured to compare signal sequences of said type with at least one predefined user-side command sequence and in the event of a valid command sequence to switch over the scattered light smoke detector into an operating mode (MODE) associated with the command sequence.

12. Scattered light smoke detector according to one of claims 1 to 10, having a planar protective cover (10) arranged on the outer face (AS) of the circuit substrate (3) for the purpose of covering the circuit substrate (3), wherein the protective cover (10) is arranged spaced at a distance from the outer face (AS) of the circuit substrate (3) such that a light channel (CH) for the light beam (L) emitted by the light emitter (4) results between the outer face (AS) of the circuit substrate (3) and an oppositely disposed inner face of the protective cover (10), wherein the protective cover (10) has a cutout (AU) for a light outcoupling/funnel element (11), wherein the light outcoupling/funnel element (11) has a light funnel (TR) for the light receiver (5) as well as a light outcoupling part (R) adjoining the same for coupling out the light beam (L) running from the light emitter (4) in the light channel (CH), and wherein the light outcoupling part (R) is embodied in such a way that the coupled-out light beam (L) extends across the light funnel (TR) and beyond into the environment of the scattered light smoke detector.

13. Scattered light smoke detector according to one of claims 1 to 10, having a planar protective cover (10) provided for covering the circuit substrate (3) and arranged on the outer face (AS) of the circuit substrate (3), wherein the protective cover (10) is arranged spaced at a distance from the outer face (AS) of the circuit substrate (3) so that an accommodation space for a light conductor element (LL) adjoining the light emitter (4) for forwarding the light beam (L) emitted by the light emitter (4) results between the outer face (AS) of the circuit substrate (3) and an oppositely disposed inner face of the protective cover (10), wherein the protective cover (10) has a cutout (AU) for a light outcoupling part (AT) of the light conductor element (LL), wherein the light conductor element (LL) is embodied in such a way that the light beam (L) running in the light conductor element (LL) is coupled out at an exit surface (AF) of the light lead-out part (AT) and extends across a receiving zone (E) of the light receiver (5) and beyond into the environment of the scattered light smoke detector.

14. Scattered light smoke detector according to one of the preceding claims, wherein the light emitter (4) is a "sidelooker" LED.

15. Scattered light smoke detector according to one of the preceding claims,
- wherein on the outer face (AS) of the circuit substrate (3) at least one first environment light emitter (13) is arranged for emitting light away from the outer face (AS) and substantially at right angles to the latter into the environment of the scattered light smoke detector, and/or
- wherein a plurality of second environment light emitters (15) for emitting light substantially radially away from the scattered light smoke detector into the environment of the scattered light smoke detector are arranged on the outer face (AS) of the circuit substrate (3) in a radially outward lying edge region, and
- wherein the light receiver (5) is arranged on the circuit substrate (3), the main receiving direction (HE) of the light receiver (5) pointing away from the outer face (AS) of the circuit substrate (3) and being at right angles thereto, and
- wherein if necessary a plurality of environment light receivers (14) are arranged on the outer face (AS) of the circuit substrate (3) in the radially outward lying edge region for the purpose of detecting environment light from a substantially radial direction toward the scattered light smoke detector, and
- wherein the scattered light smoke detector has an electronic control and evaluation unit (70) which is connected for signal communication purposes to the environment light emitters (13, 15) and the light receiver (5) as well as where applicable to the environment light receivers (14), and wherein the control and evaluation unit (70) is configured to activate the respective environment light emitters (13, 15) in order to emit in particular modulated light pulses, and wherein the control and evaluation unit (70) is configured to capture the signals (S1-S3) originating from the light receiver (5) and where applicable from the environment light receivers (14), which signals (S1-S3) correlate with the modulated light pulses reflected from objects, to evaluate the same with respect to time, and to issue a warning message (MO, WARN) if a detected object lies within a predefined distance around the scattered light smoke detector and exceeds a predefined minimum signal level.

16. Scattered light smoke detector according to one of the preceding claims, wherein a heat sensor (20), in particular a thermopile or microbolometer heat sensor, is arranged on the circuit substrate (3), wherein the scattered light smoke detector has an electronic control and evaluation unit (70) which is connected to the heat sensor (20) for signal communication purposes and which is configured to evaluate a signal (S4) captured by the heat sensor (20) for the presence of flicker frequencies characteristic of open fire and if the same are present to issue a flame alarm (MF, AL).

## Revendications

1. Détecteur de fumée à lumière diffusée, avec une coque de boîtier (2) et un support de circuit (3) accueilli dans celle-ci, au moins un émetteur de lumière (4) et un récepteur de lumière (5) étant disposés sur le support de circuit (3), dans lequel le support de circuit (3) présente un côté intérieur (IS) opposé à la coque de boitier (2) et un côté extérieur (AS) opposé au côté intérieur (IS), dans lequel l'émetteur de lumière (4) est exécuté afin d'émettre un faisceau de lumière (L) avec un rayon directionnel (RS), dans lequel l'émetteur de lumière (4) et le récepteur de lumière (5) sont disposés dans un agencement pour lumière diffusée, et dans lequel une partie du parcours du rayon directionnel (RS) s'étend, entre l'émetteur de lumière (4) et le volume à lumière diffusée (M), parallèlement au côté extérieur (AS) du support de circuit (3), **caractérisé en ce que** l'agencement pour lumière diffusée est prévu afin de détecter de la fumée dans un volume à lumière diffusée (M) situé à l'air libre à l'extérieur du détecteur de fumée à lumière diffusée.

2. Détecteur de fumée à lumière diffusée selon la revendication 1, dans lequel l'émetteur de lumière (4) est disposé et orienté de telle manière sur/vers le support de circuit (3) que le faisceau de lumière (L) qu'il envoie s'étend du bord du support de circuit (3) en direction d'un bord opposé du support de circuit (3).

3. Détecteur de fumée à lumière diffusée selon la revendication 1 ou 2, dans lequel le récepteur de lumière (5, 51) est protégé contre la lumière directe de l'émetteur de lumière (4) et dans lequel son sens de réception principal (HE) pointe à l'écart du côté extérieur (AS) du support de circuit (3).

4. Détecteur de fumée à lumière diffusée selon la revendication 3, dans lequel le récepteur de lumière (5, 51) présente une surface de détection (F), dans lequel une fenêtre optique (OF) est prévue dans le support de circuit (3) pour le récepteur de lumière (51) et dans lequel le récepteur de lumière (51) est disposé et orienté de telle manière sur/vers le côté intérieur (IS) du support de circuit (3) que la surface de détection (F) s'étend parallèlement au côté intérieur (IS) du support de circuit (3) et est opposée à la fenêtre optique (OF) de sorte que la lumière diffusée de l'émetteur de lumière (4) est détectable à travers la fenêtre optique (OF) faisant office d'écran (B).

5. Détecteur de fumée à lumière diffusée selon la revendication 4, dans lequel le récepteur de lumière (5, 51) est une photodiode avec un boîtier flip-chip ou avec un boîtier Reverse-Gullwing pour un montage en surface direct sur le support de circuit (3).

6. Détecteur de fumée à lumière diffusée selon la revendication 3, dans lequel le récepteur de lumière (5, 52) présente une surface de détection (F), dans lequel le récepteur de lumière (52) est disposé et orienté de telle manière sur/vers le côté extérieur (AS) du support de circuit (3) que, d'une part, la surface de détection (F) s'étend parallèlement au côté extérieur (AS) du support de circuit (3) et, d'autre part, la lumière diffusée de l'émetteur de lumière (4) est détectable.

7. Détecteur de fumée à lumière diffusée selon l'une des revendications précédentes, dans lequel le support de circuit (3) est prévu ou exécuté afin d'apposer une plaque décorative (DEKO) ou un film décoratif sur le côté extérieur (AS) du support de circuit (3), et dans lequel la plaque décorative (DEKO) ou le film décoratif présente le cas échéant des évidements ou des fenêtres transparentes pour le récepteur de lumière (5, 51, 52) et/ou pour d'autres composants optoélectroniques (15, LED).

8. Détecteur de fumée à lumière diffusée selon l'une des revendications précédentes, dans lequel un récepteur de lumière directe (6) est disposé sur le support de circuit (3), dans lequel le récepteur de lumière directe (6) est orienté vers l'émetteur de lumière (4) pour la détection de lumière directe (D), le volume à lumière diffusée (M) se trouvant entre cet émetteur de lumière (4) et le récepteur de lumière directe (6) et dans lequel le récepteur de lumière directe (6) est prévu afin de surveiller l'encrassement et/ou de surveiller une diminution de clarté de l'émetteur de lumière (4).

9. Détecteur de fumée à lumière diffusée selon l'une des revendications précédentes, dans lequel le récepteur de lumière (5, 53) est disposé et orienté dans une zone périphérique du support de circuit (3) et selon un angle de lumière diffusée (α) par rapport à l'émetteur de lumière (4), dans lequel le volume à lumière diffusée (M, M2) ainsi constitué se trouve à l'opposé du côté extérieur (AS) du support de circuit (3) et dans lequel un sens de réception principal (HE) du récepteur de lumière (5, 53) est parallèle à ce côté extérieur (AS).

10. Détecteur de fumée à lumière diffusée selon la revendication 8 ou 9, dans lequel le récepteur de lumière (5, 53) et/ou le récepteur de lumière directe (6) est une photodiode "Sidelooker".

11. Détecteur de fumée à lumière diffusée selon l'une des revendications précédentes, dans lequel un récepteur de lumière directe (6) est disposé sur le support de circuit (3), dans lequel le récepteur de lumière directe (6) est orienté vers l'émetteur de lumière (4) pour la détection de lumière directe (D) de l'émetteur de lumière (4), et dans lequel le détecteur de fumée à lumière diffusée présente une unité de commande et d'évaluation électronique (70), laquelle est reliée du point de vue de la technique des signaux avec l'émetteur de lumière (4) et le récepteur de lumière directe (6) et aménagée afin de commander l'émetteur de lumière (4) ainsi que de percevoir le signal (S2) émanant du récepteur de lumière directe (6) ainsi que de l'évaluer quant à une suite de sauts de signal avec de grandes modifications de signal, et dans lequel l'unité de commande et d'évaluation (70) est aménagée afin de comparer de telles suites de signaux à au moins une suite de commande fixée au préalable par l'utilisateur et de faire passer le détecteur de fumée à lumière diffusée dans un mode de fonctionnement (MODE) affecté à la suite de commande en présence d'une suite de commande valide.

12. Détecteur de fumée à lumière diffusée selon l'une des revendications 1 à 10, avec un écran de protection (10) plan disposé sur le côté extérieur (AS) du support de circuit (3), prévu afin de protéger le support de circuit (3), dans lequel l'écran de protection (10) est disposé à l'écart du côté extérieur (AS) du support de circuit (3), de sorte qu'un canal de lumière (CH) pour le faisceau de lumière (L) émis par l'émetteur de lumière (4) en résulte entre le côté extérieur (AS) du support de circuit (3) et un côté intérieur opposé de l'écran de protection (10), dans lequel l'écran de protection (10) présente un évidement (AU) pour un élément d'éjection de lumière/en entonnoir (11), dans lequel l'élément d'éjection de lumière/en entonnoir (11) est un entonnoir à lumière (TR) pour le récepteur de lumière (5) ainsi qu'une pièce d'éjection de lumière (R) jointe à celui-ci pour l'éjection du faisceau de lumière (L) de l'émetteur de lumière (4) s'étendant dans le canal de lumière (CH) et dans lequel la pièce d'éjection de lumière (R) est aménagée de telle sorte que le faisceau de lumière (L) éjecté s'étend au-delà de l'entonnoir à lumière (TR) dans l'environnement du détecteur de fumée à lumière diffusée.

13. Détecteur de fumée à lumière diffusée selon l'une des revendications 1 à 10, avec un écran de protection (10) plan disposé sur le côté extérieur (AS) du support de circuit (3), prévu afin de protéger le support de circuit (3), dans lequel l'écran de protection (10) est disposé à l'écart du côté extérieur (AS) du support de circuit (3), de sorte qu'un espace d'accueil pour un élément de direction de la lumière (LL) contigu à l'émetteur de lumière (4) pour la transmission du faisceau de lumière (L) émis par l'émetteur de lumière (4) en résulte entre le côté extérieur (AS) du support de circuit (3) et un côté intérieur opposé de l'écran de protection (10), dans lequel l'écran de protection (10) présente un évidement (AU) pour une pièce d'éjection de lumière (AT) de l'élément de direction de la lumière (LL), dans lequel l'élément de direction de la lumière (LL) est aménagé de telle sorte que le faisceau de lumière (L) s'étendant dans l'élément de direction de la lumière (LL) s'étend de manière découplée sur une surface de sortie (AF) de la pièce d'éjection de lumière (AT) et au-delà d'une zone de réception (E) du récepteur de lumière (5) dans l'environnement du détecteur de fumée à lumière diffusée.

14. Détecteur de fumée à lumière diffusée selon l'une des revendications précédentes, dans lequel l'émetteur de lumière (4) est une LED "Sidelooker".

15. Détecteur de fumée à lumière diffusée selon l'une des revendications précédentes,
- dans lequel au moins un premier émetteur de lumière environnante (13) afin d'émettre de la lumière à l'écart du côté extérieur (AS) et essentiellement à la perpendiculaire de celui-ci dans l'environnement du détecteur de fumée à lumière diffusée est disposé sur le côté extérieur (AS) du support de circuit (3) et/ou
- dans lequel plusieurs deuxièmes émetteurs de lumière environnante (15) afin d'émettre de la lumière essentiellement radialement à l'écart du détecteur de fumée à lumière diffusée dans l'environnement du détecteur de fumée à lumière diffusée sont disposés sur le côté extérieur (AS) du support de circuit (3), dans une zone périphérique radiale extérieure, et
- dans lequel le récepteur de lumière (5), dont le sens de réception principal (HE) pointe à l'écart du côté extérieur (AS) du support de circuit (3) et lui est perpendiculaire, est disposé sur le support de circuit (3), et
- dans lequel, sur le côté extérieur (AS) du support de circuit (3), dans la zone périphérique radiale extérieure, plusieurs récepteurs de lumière environnante (14) sont le cas échéant disposés afin de détecter la lumière environnante dirigée essentiellement radialement vers le détecteur de fumée à lumière diffusée, et
- dans lequel le détecteur de fumée à lumière diffusée présente une unité de commande et d'évaluation électronique (70) reliée du point de vue de la technique des signaux avec les émetteurs de lumière environnante (13, 15) et le récepteur de lumière (5) ainsi que, le cas échéant, les récepteurs de lumière environnante (14), et dans lequel l'unité de commande et d'évaluation (70) est aménagée afin de commander les émetteurs de lumière environnante respectifs (13, 15) pour l'émission d'impulsions lumineuses en particulier modulées et dans lequel l'unité de commande et d'évaluation (70) est aménagée afin de saisir les signaux (S1-S3) émanant du récepteur de lumière (5) et, le cas échéant, des récepteurs de lumière environnante (14), lesquels signaux sont en corrélation avec les impulsions lumineuses modulées réfléchies sur les objets, de les évaluer temporellement et d'émettre un message d'avertissement (MO, WARN) lorsqu'un objet détecté se trouve dans une distance déterminée au préalable autour du détecteur de fumée à lumière diffusée et excède un niveau de signal minimal déterminé au préalable.

16. Détecteur de fumée à lumière diffusée selon l'une des revendications précédentes, dans lequel un capteur de chaleur (20), en particulier un capteur de chaleur à thermopile ou microbolométrique est disposé sur le support de circuit (3), dans lequel le détecteur de fumée à lumière diffusée présente une unité de commande et d'évaluation électronique (70), reliée du point de vue de la technique des signaux avec le capteur de chaleur (20) et aménagée afin d'évaluer un signal (S4) perçu par le capteur de chaleur (20) quant à la présence de fréquences de scintillement caractéristiques d'une flamme nue et d'émettre un message quant à l'existence de flammes (MF, AL) en cas de résultat positif.
